# EUROPEAN PATENT SPECIFICATION

(11) **EP 3 409 107 B1**
(45) Date of publication and mention of the grant of the patent: **06.07.2022**
(21) Application number: 18176032.3
(22) Date of filing: 27.04.2012
(51) Int. Cl.: A01J 5/017, A01J 7/04

(54) **SYSTEM AND METHOD FOR USING ROBOTS IN CONJUNCTION WITH A ROTARY MILKING PLATFORM**
SYSTEM UND VERFAHREN ZUR VERWENDUNG VON ROBOTERN IN VERBINDUNG MIT EINEM MELKKARUSSELL
SYSTÈME ET PROCÉDÉ D'UTILISATION DE ROBOTS EN CONJONCTION AVEC UNE PLATEFORME DE TRAITE ROTATIVE

(30) Priority: 18.04.2012 US 201213449951
(43) Date of publication of application: 05.12.2018
(62) Divisional of application: 12719229.2
(73) Proprietor: Technologies Holdings Corporation, Houston, TX 77019 (US)
(72) Inventor: HOFMAN, Henk, NL-8531 PC Lemmer (NL); DE RUIJTER, Cor, 7951 KS Staphorst (NL); KOEKOEK, Menno, 8252 JK Dronten (NL); STEINGRABER, Gary, Madison, WI 53716 (US); VAN DER SLUIS, Peter William, 8271 PP IJsselmuiden (NL)
(74) Representative: Moore, Joanne Camilla

(56) References cited:
- WO-A1-00/74472
- WO-A1-97/37530
- WO-A1-2010/110663
- US-A1- 2012 006 269

## Description

### TECHNICAL FIELD

This invention relates generally to dairy farming and more particularly to a system and method for using robots in conjunction with a rotary milking platform.

### BACKGROUND OF THE INVENTION

Over time, the size and complexity of dairy milking operations has increased. Accordingly, the need for efficient and scalable systems and methods that support dairy milking operations has also increased. Systems and methods supporting dairy milking operations, however, have proven inadequate in various respects.

US 2012/0006269 discloses a milking system includes a rotary milking platform having a plurality of milking stalls and a plurality of milking devices, each milking device configured for attachment to the teats of a dairy livestock located in a corresponding milking stall of the rotary milking platform. The system further includes one or more robotic devices operable to perform one or more functions, including preparing the teats of a dairy livestock for the attachment of a milking apparatus, attaching a milking apparatus to the teats of a dairy livestock, and applying a sanitizing agent to the teats of a dairy livestock subsequent to the removal of a milking apparatus from the teats of the dairy livestock. Each of the one or more functions performed by the one or more robotic devices is performed during a period of time when the rotary milking platform is substantially stationary.

### SUMMARY OF THE INVENTION

According to embodiments of the present disclosure, disadvantages and problems associated with previous systems supporting dairy milking operations may be reduced or eliminated.

According to the invention, a system includes a rotary milking platform having a plurality of milking stalls and a first robotic device positioned at a first location proximate to the rotary milking platform. The first robotic device is operable to prepare the teats of a first dairy livestock located in a first milking stall of the rotary milking platform while the first milking stall is substantially adjacent to the first location. The system also includes a second robotic device positioned at a second location proximate to the rotary milking platform. The second robotic device is operable to attach a first milking device to the teats of the first dairy livestock located in the first milking stall while the first milking stall is substantially adjacent to the second location. The system also includes a third robotic device positioned at a third location proximate to the rotary milking platform. The third robotic device is operable to attach a second milking device to the teats of a second dairy livestock located in a second milking stall while the second milking stall is substantially adjacent to the third location. At least one milking stall separates the second milking stall and the first milking stall to space apart the third robotic device and the second robotic device. The system also includes a fourth robotic device positioned at a fourth location proximate to the rotary milking platform. The fourth robotic device is operable to apply a sanitizing agent to the teats of the first dairy livestock located in the first milking stall, subsequent to a removal of the first milking device from the teats of the first dairy livestock, while the first milking stall is substantially adjacent to the fourth location.

A method includes receiving a first dairy livestock into a first milking stall of a rotary milking platform. The rotary milking platform has a plurality of milking stalls, wherein a second milking stall of the rotary milking platform contains a second dairy livestock and at least one milking stall separates the second milking stall and the first milking stall. The method also includes rotating the rotary milking platform, such that the first milking stall is substantially adjacent to a first robotic device positioned at a first location proximate to the rotary milking platform. The first robotic device is operable to prepare the teats of the first dairy livestock located in the first milking stall while the first milking stall is substantially adjacent to the first location. The method also includes preparing, using the first robotic device, the teats of the first dairy livestock located in the first milking stall. The method also includes rotating the rotary milking platform, such that the first milking stall is substantially adjacent to a second robotic device positioned at a second location proximate to the rotary milking platform. The second robotic device is operable to attach a first milking device to the teats of the first dairy livestock located in the first milking stall while the first milking stall is substantially adjacent to the second location. The method also includes attaching, using the second robotic device, the first milking device to the teats of the first dairy livestock located in the first milking stall. The second milking stall is substantially adjacent to a third robotic device positioned at a third location proximate to the rotary milking platform, the third robotic device operable to attach a second milking device to the teats of the second dairy livestock. The method also includes milking the first dairy livestock located in the first milking stall using the attached first milking device. The method also includes milking the second dairy livestock located in the second milking stall using the attached second milking device. The method also includes rotating the rotary milking platform, such that the first milking stall is substantially adjacent to a fourth robotic device positioned at a fourth location proximate to the rotary milking platform. The fourth robotic device is operable to apply a sanitizing agent to the teats of the first dairy livestock located in the milking stall, subsequent to a removal of the first milking device from the teats of the dairy livestock, while the first milking stall is substantially adjacent to the fourth location. The method also includes applying, using the fourth robotic device, a sanitizing agent to the teats of the first dairy livestock located in the first milking stall

Particular embodiments of the present disclosure may provide one or more technical advantages. For example, the use of robotic devices in conjunction with a rotary milking platform may increase the throughput of the milking system, thereby increasing the overall milk production of the milking platform. Furthermore, because the various milking functions are performed by one or more robotic devices as opposed to human laborers (which may be expensive and/or difficult to find), the cost associated with operating the milking system may be reduced.

Certain embodiments of the present disclosure may include some, all, or none of the above advantages. One or more other technical advantages may be readily apparent to those skilled in the art from the figures, descriptions, and claims included herein.

### BRIEF DESCRIPTION OF THE DRAWINGS

To provide a more complete understanding of the presently claimed invention and the features and advantages thereof, reference is made to the following description taken in conjunction with the accompanying drawings, in which:
FIGURE 1 illustrates a top view of an example automated rotary milking system;
FIGURE 2 illustrates a top view of an alternative example automated rotary milking system;
FIGURE 3 illustrates a top view of an additional alternative example automated rotary milking parlor system;

Certain embodiments of the present disclosure may include some, all, or none of the above advantages. One or more other technical advantages may be readily apparent to those skilled in the art from the figures, descriptions, and claims included herein.

### BRIEF DESCRIPTION OF THE DRAWINGS

To provide a more complete understanding of the present invention and the features and advantages thereof, reference is made to the following description taken in conjunction with the accompanying drawings, in which:

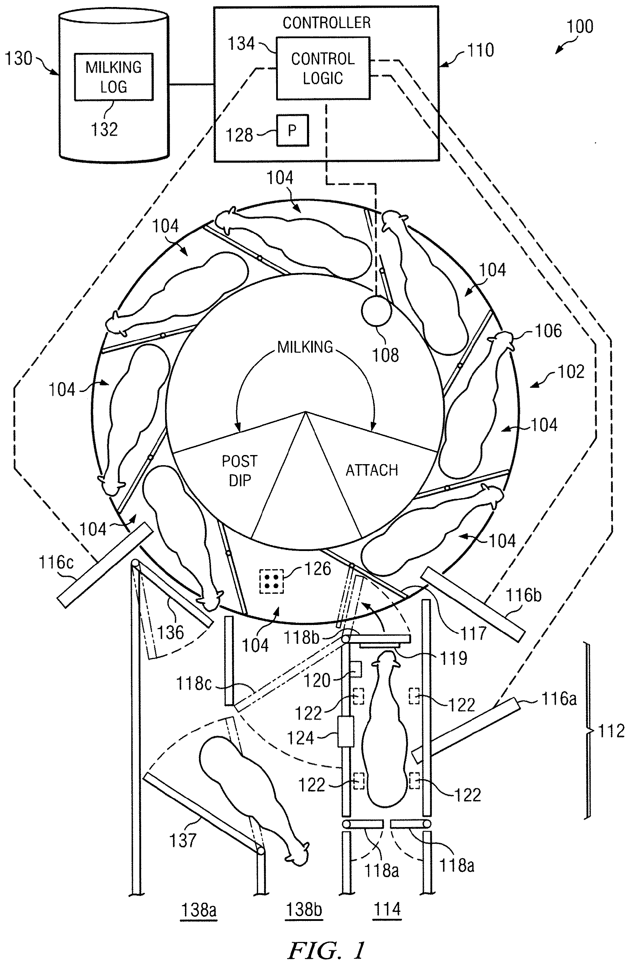

FIGURE 1 illustrates a top view of an example automated rotary milking system, according to certain embodiments of the present disclosure;

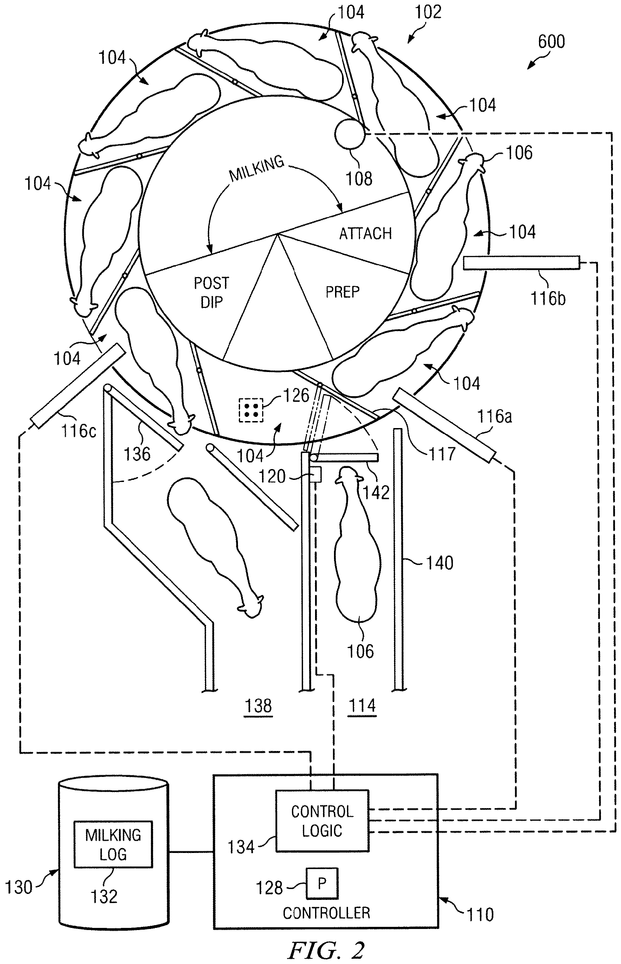

FIGURE 2 illustrates a top view of an alternative example automated rotary milking system, according to certain embodiments of the present disclosure;

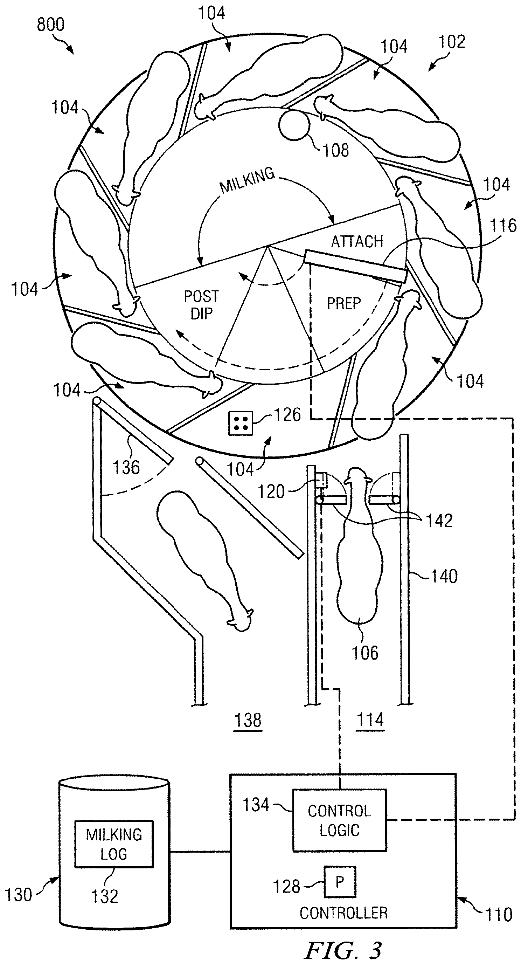

FIGURE 3 illustrates a top view of an additional alternative example automated rotary milking parlor system, according to certain embodiments of the present disclosure;

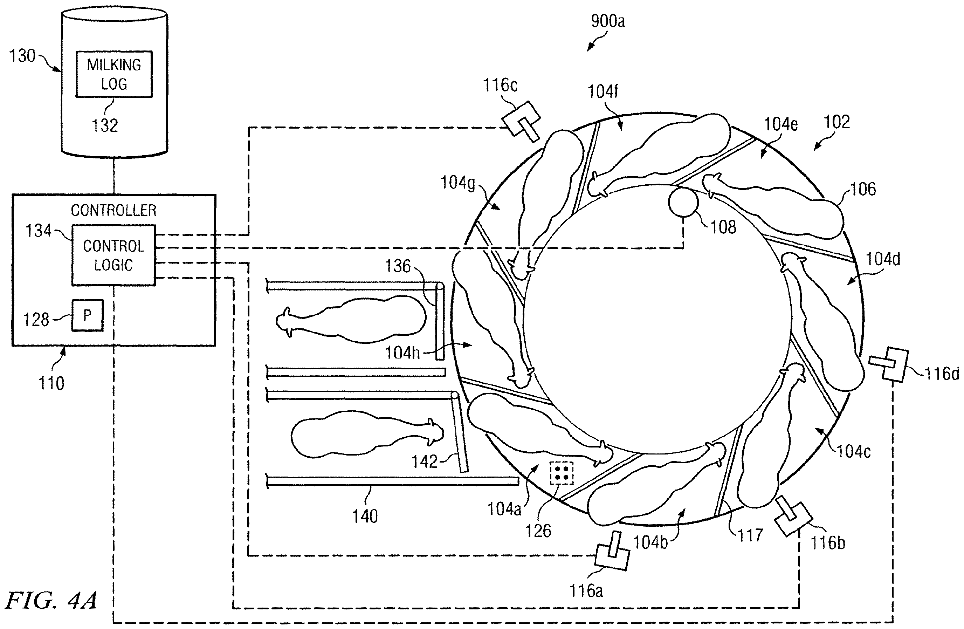

FIGURES 4A-4C illustrate top views of alternative example automated rotary milking parlor systems, according to certain embodiments of the present disclosure;

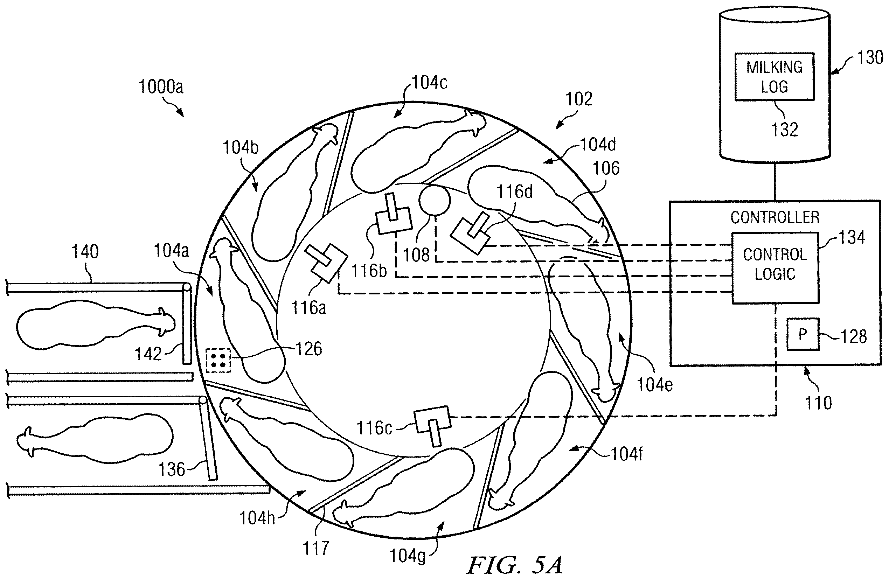

FIGURES 5A-5C illustrate top views of alternative example automated rotary milking parlor systems, according to certain embodiments of the present disclosure;

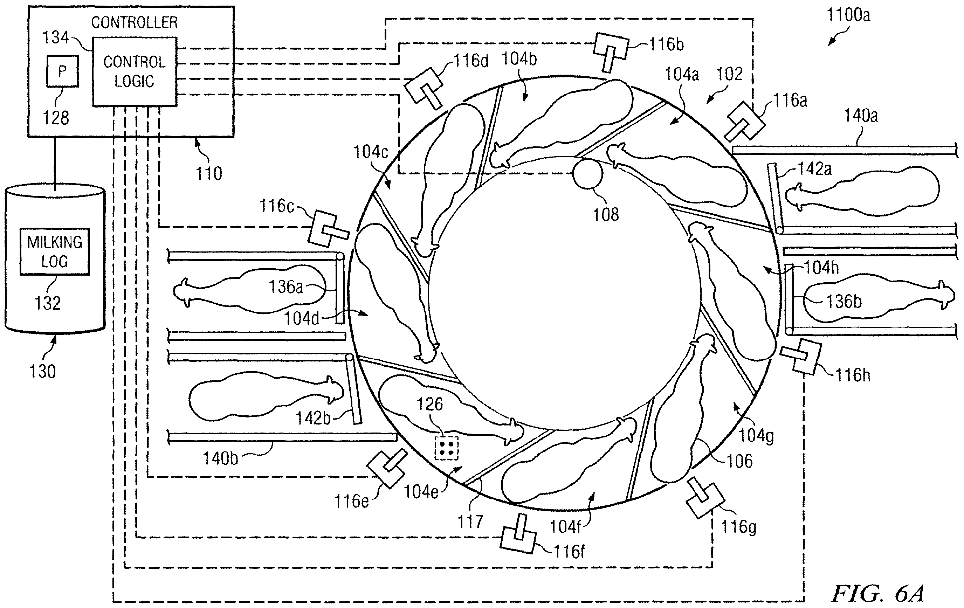

FIGURES 6A-6C illustrate top views of alternative example automated rotary milking parlor systems, according to certain embodiments of the present disclosure; and

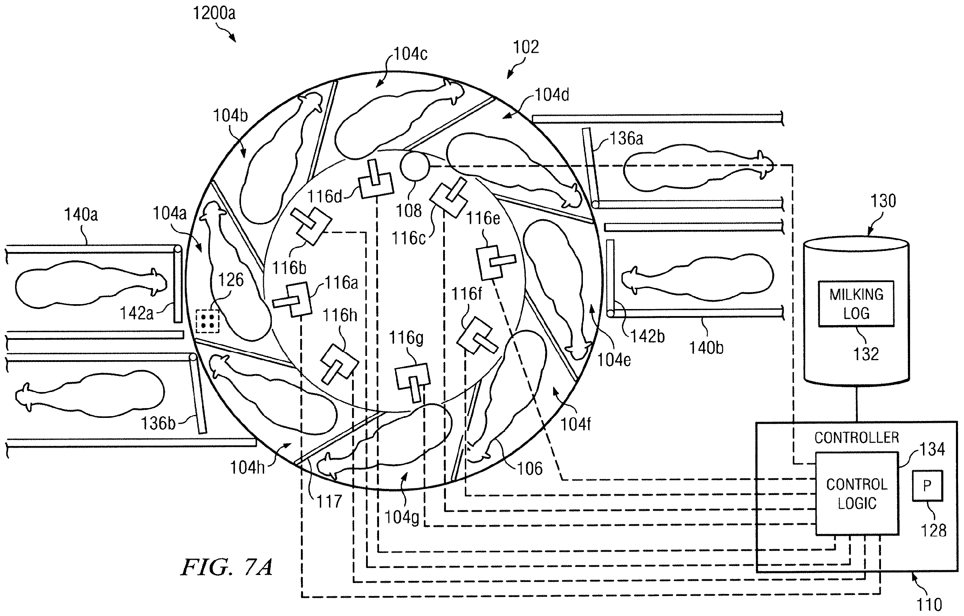

FIGURES 7A-7C illustrate top views of alternative example automated rotary milking parlor systems, according to certain embodiments of the present disclosure.

### DETAILED DESCRIPTION OF THE DRAWINGS

FIGURE 1 illustrates a top view of an example automated rotary milking system 100, according to certain embodiments of the present disclosure. System 100 includes a rotary milking platform 102 having a number of milking stalls 104 each configured to facilitate milking of dairy livestock 106. A rotary drive mechanism 108 coupled to rotary milking platform 102 is operable to control the rotation of rotary milking platform 102 (e.g., in response to signals received from controller 110).

FIGURES 4A-4C illustrate top views of alternative example automated rotary milking parlor systems;

FIGURES 5A-5C illustrate top views of alternative example automated rotary milking parlor systems;

FIGURES 6A-6C illustrate top views of alternative example automated rotary milking parlor systems; and

FIGURES 7A-7C illustrate top views of alternative example automated rotary milking parlor systems.

The figures illustrate systems which each have an arrangement which is not part of the presently claimed invention and are present for illustration purposes.

### DETAILED DESCRIPTION OF THE DRAWINGS

FIGURE 1 illustrates a top view of an example automated rotary milking system 100. System 100 includes a rotary milking platform 102 having a number of milking stalls 104 each configured to facilitate milking of dairy livestock 106. A rotary drive mechanism 108 coupled to rotary milking platform 102 is operable to control the rotation of rotary milking platform 102 (e.g., in response to signals received from controller 110). System 100 further includes a preparation stall 112 positioned between a holding pen 114 and one or more milking stalls 104 of rotary milking platform 102, and one or more robotic devices 116 positioned proximate to rotary milking platform 102 and/or preparation stall 112. Although this particular implementation of system 100 is illustrated and primarily described, the present invention contemplates any suitable implementation of system 100 according to particular needs. Additionally, although the present disclosure contemplates system 100 facilitating the milking of any suitable dairy livestock 106 (e.g., cows, goats, sheep, water buffalo, etc.), the remainder of this description is detailed with respect to dairy cows.

Rotary milking platform 102 may include any suitable combination of structure and materials forming a substantially round platform having a number of milking stalls 104 positioned around the perimeter of the platform such that the milking stalls 104 rotate as dairy cows in milking stalls 104 are milked. As one particular example, rotary milking platform 102 may have a diameter of one hundred fifty-five inches and may include eight equally-sized milking stalls 104 positioned around the perimeter of the platform. In certain embodiments, each milking stall 104 may include a stall gate 117 configured to control the flow of dairy cows 106 into the milking stall 104 from preparation stall 112. Additionally, stall gates 117 may each be coupled to one or more actuators operable to open/close stall gates 117 in response to receipt of a signal from controller 110 (as described in further detail below). Although a rotary milking platform 102 having a particular size and a particular number of stalls 104 is illustrated, the present disclosure contemplates a rotary milking platform 102 having any suitable size and including any suitable number of stalls 104. Moreover, while the shape of the rotary milking platform 102 is primarily depicted and described as having a circular shape, the present disclosure contemplates a rotary milking platform 102 having any suitable shape.

Rotary milking platform 102 may be coupled (e.g., via one or more gears or any other suitable power transmission mechanism) to a rotary drive mechanism 108. Rotary drive mechanism 108 may include a motor (e.g., a hydraulic motor, an electric motor, or any other suitable motor) operable to impart a variable amount of rotational force on rotary milking platform 102 via one or more gears. In certain embodiments, rotary drive mechanism 108 may be operable to start/stop the rotation of rotary milking platform 102 in response to receipt of a signal from controller 110 (as described in further detail below).

Preparation stall 112 may be positioned proximate to both holding pen 114 and rotary milking platform 102 such that a dairy cow 106 in holding pen 114 may enter preparation stall 112 prior to entering a milking stall 104 of rotary milking platform 102. Preparation stall 112 may include any suitable number of walls constructed of any suitable materials arranged in any suitable configuration operable to prevent movement of dairy cows 106. For example, the walls of preparation stall 112 may each include any number and combination of posts, rails, tubing, rods, connectors, cables, wires, and/or beams operable to form a substantially planar barricade such as a fence, wall, and/or other appropriate structure suitable to prevent movement of dairy cows 106.

Preparation stall 112 may include an entrance gate 118a controlling the flow of dairy cows 106 into preparation stall 112 from holding pen 114, an exit gate 118b controlling the flow of dairy cows 106 from preparation stall 112 into a milking stall 104 of rotary milking platform 102, and a sorting gate 118c allowing dairy cows to return to holding pen 114. In certain embodiments, gates 118 may each be coupled to one or more actuators operable to open/close gates 118 in response to receipt of a signal from controller 110 (as described in further detail below).

In certain embodiments, preparation stall 112 may include a feed manger 119 (e.g., coupled to exit gate 118b). Feed manger 119 may be operable to dispense feed (e.g., in response to receipt of a signal from controller 110) in order to entice dairy cows 106 to enter preparation stall 112.

In certain embodiments, preparation stall 112 may additionally include an identification device 120 operable to identify a dairy cow located in preparation stall 112. For example, identification device 120 may comprise any suitable radiofrequency identification (RFID) reader operable to read an RFID tag of a dairy cow 106 (e.g., an RFID ear tag). In certain embodiments, identification device 120 may communicate the identity of a dairy cow 106 located in preparation stall 112 (e.g., a tag number) to controller 110, which may determine (e.g., based on a milking log 132 stored in memory 130) if it is an appropriate time to milk the identified dairy cow 106 (as described in further detail below).

In certain embodiments, preparation stall 112 may additionally include one or more load cells 122 (e.g., one or more scales or other suitable devices) operable to determine a weight for a dairy cow located in the preparation stall 112 and/or a vision system 124 (e.g., a camera or other suitable device) operable to determine the size of a dairy cow located in preparation stall 112. Load cells 122 and vision system 124 may each be communicatively coupled (e.g., via wireless or wireline communication) to controller 110 such that a determined weight and size associated with a dairy cow 106 in preparation stall 112 may be communicated to controller 110. Controller 110 may associate the determined weight and size of the dairy cow 106 with the identification of the dairy cow 106 such that information associated with the dairy cow 106 stored in milking log 132 may be updated.

Robotic devices 116 may each comprise any suitable robotic device constructed from any suitable combination of materials (e.g., controllers, actuators, software, hardware, firmware, etc.) operable to perform certain functions associated with the milking of dairy cows 106 in an automated manner (as described in further detail below). In certain embodiments, robotic devices 116 may include an arm operable to rotate about a pivot point such that robotic devices 116 may extend beneath a dairy cow 106 to perform functions associated with the milking of the dairy cows 106 and retract from beneath the dairy cow 106 once those functions have been completed.

In certain embodiments, robotic devices 116 of system 100 may include a preparation robot 116a, an attachment robot 116b, and a post dip robot 116c. Preparation robot 116a may be positioned proximate to preparation stall 112 such that preparation robot 116a may extend and retract from between the legs of a dairy cow 106 located in preparation stall 112. Preparation robot 116a may be operable to prepare the teats of a dairy cow 106 located in preparation stall 112 for the attachment of a milking apparatus 126. In certain embodiments, preparing the teats of a dairy cow 106 for the attachment of a milking apparatus 126 may include applying a sanitizing agent to the teats of a dairy cow 106, cleaning the teats of the dairy cow, stimulating the teats of the dairy cow 106, and any other suitable procedures.

Attachment robot 116b may be positioned proximate to rotary milking platform 102 such that attachment robot 116b may extend and retract from between the legs of a dairy cow 106 in a milking stall 104 located at a first rotational position of rotary milking platform 102 (the "attach position"). Attachment robot 116b may be operable to perform functions including attaching a milking apparatus 126 to the teats of a dairy cow 106 in the milking stall 104 located at the attach position. The attached milking apparatus 126 may be stored beneath the floor of the milking stall 104 (or at any other suitable location) such that the milking apparatus is accessible by attachment robot 116b.

Post dip robot 116c may be positioned proximate to rotary milking platform 102 such that post dip robot 116c may extend and retract from between the legs of a dairy cow 106 in a milking stall 104 located at a second rotational position of rotary milking platform 102 (the "post dip position"). Post dip robot 116c may be operable to perform functions including applying a sanitizing agent to the teats of a dairy cow 106 in the milking stall 104 located at the post dip position (subsequent to the removal of a milking apparatus 126 from the teats of the dairy cow 106).

In certain embodiments, each of the above-described functions performed by preparation robot 116a, attachment robot 116b, and post dip robot 116c may be performed while rotary milking platform 102 is substantially stationary or while the rotary milking platform 102 is rotating (as controlled by controller 110 in conjunction with rotary drive mechanism 108, as described in further detail below).

In certain embodiments, various components of system 100 (e.g., rotary drive mechanism 108, actuators coupled to gates 118 of preparation stall 112, and robotic devices 116) may each be communicatively coupled (e.g., via a network facilitating wireless or wireline communication) to controller 110, which may initiate/control the automated operation of those devices (as described in further detail below). Controller 110 may include one or more computer systems at one or more locations. Each computer system may include any appropriate input devices (such as a keypad, touch screen, mouse, or other device that can accept information), output devices, mass storage media, or other suitable components for receiving, processing, storing, and communicating data. Both the input devices and output devices may include fixed or removable storage media such as a magnetic computer disk, CD-ROM, or other suitable media to both receive input from and provide output to a user. Each computer system may include a personal computer, workstation, network computer, kiosk, wireless data port, personal data assistant (PDA), one or more processors within these or other devices, or any other suitable processing device. In short, controller 110 may include any suitable combination of software, firmware, and hardware.

Controller 110 may additionally include one or more processing modules 128. Processing modules 128 may each include one or more microprocessors, controllers, or any other suitable computing devices or resources and may work, either alone or with other components of system 100, to provide a portion or all of the functionality of system 100 described herein.

Controller 110 may additionally include (or be communicatively coupled to via wireless or wireline communication) memory 130. Memory 130 may include any memory or database module and may take the form of volatile or non-volatile memory, including, without limitation, magnetic media, optical media, random access memory (RAM), read-only memory (ROM), removable media, or any other suitable local or remote memory component. Memory 130 may store a milking log 132, which may be a table listing each dairy cow 106 which may enter a milking stall 104 of rotary milking platform 102 along with information associated with each dairy cow 106 (e.g., milking history, weight, and size). Although milking log 132 is depicted and primarily described as being stored in memory 130, the present disclosure contemplates milking log 132 being stored at any other suitable location in system 100.

In certain embodiments, controller 110 may include control logic 134 (e.g., stored in memory module 130), which may include any information, logic, and/or instructions stored and/or executed by controller 110 to control the automated operation of system 100, as described below. For example, in response to control logic 134, processor 128 may (1) communicate signals to actuators coupled to gates 118 to initiate opening/closing of those gates, (2) communicate signals to rotary drive mechanism 108 to initiate the starting/stopping of rotary milking platform 102, and (3) communicate signals to robotic devices 116 to initiate performance of the above-described functions associated with those robotic devices 116. Additionally, in response to control logic 134, processor 128 may be operable to update milking log 132 in response to information associated with dairy cows 106 received from various components of system 100 (e.g., identification device 120, load cells 122, vision system 124, and milking apparatus 126).

In operation of an example embodiment of system 100, controller 110 may receive a signal indicating the presence of a dairy cow 106 located in preparation stall 112. The signal indicating the presence of a dairy cow 106 in preparation stall 112 may be received from a presence sensor associated with preparation stall 112 or from any other suitable component of system 100 (e.g., identification device 120). Additionally, controller 110 may receive a signal from identification device 120, which may include the identity (e.g., tag number) of the dairy cow 106. Based on the identity of the dairy cow 106 in preparation stall 112, controller 110 may determine if it is an appropriate time to milk the identified dairy cow 106.

For example, controller 110 may access milking log 132 stored in memory 130, which may include the date/time that the identified dairy cow 106 was last milked. If it is determined that the amount of time elapsed since the identified dairy cow 106 was last milked is greater than a predefined amount of time, controller 110 may determine that it is an appropriate time to milk the identified dairy cow 106; otherwise, controller 110 may determine it is not an appropriate time to milk the identified dairy cow 106. As an additional example, controller 110 may access milking log 132 stored in memory 130, which may include the amount of milk collected from the identified dairy cow 106 during a previous time period (e.g., the previous eight to twelve hours). If the amount of milk collected during the previous time period is less than a predefined amount associated with the identified dairy cow 106, controller 110 may determine that it is an appropriate time to milk the identified dairy cow 106; otherwise, controller 110 may determine it is not an appropriate time to milk the identified dairy cow 106.

Additionally, controller 110 may be operable to update information associated with the identified dairy cow 106 in milking log 132 based on information received from additional components of system 100. For example, controller 110 may be operable to update the weight of the identified dairy cow 106 based on information received from load cells 122 of preparation stall 112. Additionally, controller 110 may be operable to update the size of the identified dairy cow 106 based on information received from vision system 124 of preparation stall 112.

If controller 110 determines that it is not an appropriate time to milk the identified dairy cow 106, controller 110 may generate a signal to be communicated to an actuator coupled to sorting gate 118c of preparation stall 112, the communicated signal initiating the opening of sorting gate 118c such that the identified dairy cow 106 may return to holding pen 114 to be milked at a later time.

If controller 110 determines that it is an appropriate time to milk the identified dairy cow 106, feed manger 119 (e.g., in response to a signal received from controller 110) may open in order to provide feed to the identified dairy cow 106. Additionally, preparation robot 116a (e.g., in response to a signal received from controller 110) may position itself beneath the identified dairy cow 106 and prepare the teats of the identified dairy cow 106 for the attachment of a milking apparatus 126 (e.g., by applying a sanitizing agent to the teats of the identified dairy cow 106, cleaning the teats of the identified dairy cow 106, and stimulating the teats of the identified dairy cow 106). Once preparation robot 116a has prepared the teats of the identified dairy cow 106, controller 110 may generate signals to be communicated to actuators coupled to exit gate 118b and the stall gate 117 of the milking stall 104 located adjacent to preparation stall 112, the communicated signals initiating the opening of exit gate 118b and the stall gate 117 such that the identified dairy cow 106 may enter a milking stall 104 of rotary milking platform 102. Once the identified dairy cow 106 has fully entered a milking stall 104, controller 110 may (1) communicate signals to the actuators coupled exit gate 118b and stall gate 117, the signals initiating the closing of exit gate 118b and stall gate 117, (2) communicate a signal to entrance gate 118a of preparation stall 112, the signal initiating the opening of entrance gate 118a such that a next dairy cow 106 may enter preparation stall 112. In some embodiments, controller 110 may communicate a signal to rotary drive mechanism 108, the signal causing the rotary milking platform 102 to rotate such that the milking stall 104 in which the identified dairy cow 106 is located moves toward a first rotational position of rotary milking platform 102 (the "attach" position). In other embodiments, rotary milking platform 102 may already be rotating as the identified dairy cow 106 enters the milking stall 104.

With the milking stall 104 of the identified dairy cow 106 moving through the attach position, attachment robot 116b (e.g., in response to a signal received from controller 110) may position itself beneath the identified dairy cow 106 and attach a milking apparatus 126 to the teats of the identified dairy cow 106. For example, attachment robot 116b may access a milking apparatus 126 corresponding to the milking stall 104 of the identified dairy cow 106 from a known storage position within the milking stall 104 (e.g., beneath the floor of the milking stall 104) and attach the accessed milking apparatus 126 to the teats of the identified dairy cow 106. The various robots 116 described herein may perform their respective functions while the rotary milking platform 102 rotates at a normal pace.

As rotary milking platform 102 continues to rotate, the identified dairy cow 106 is milked, with the milking apparatus 126 being detached and withdrawn (e.g., by retracting the milking apparatus 126 to the known storage position within the milking stall 104) once milking is complete. With milking complete, the milking stall 104 in which the identified dairy cow 106 is located continues to rotate toward a second rotational position (the "post dip position").

With the milking stall 104 of the identified dairy cow 106 moving through the post dip position, post dip robot 116c (e.g., in response to a signal received from controller 110) may position itself beneath the identified dairy cow 106 and apply a sanitizing agent to the teats of the identified dairy cow 106. In certain embodiments, the post dip position may be located adjacent to an exit gate 136 leading to an exit pen 138. Once post dip robot 116c has applied the sanitizing agent, control logic 134 may communicate a signal to an actuator coupled to exit gate 136, the signal initiating the opening of exit gate 136 such that the identified dairy cow 106 may exit the milking stall 104 and enter the exit pen 138. In certain embodiments, exit pen 138 may be divided into an exit pen 138a and a catch pen 138b, and an exit sorting gate 137 may facilitate the sorting of exiting dairy cows between exit pen 138a and catch pen 138b. If controller 110 determines that the identified cow 106 was not fully milked or that the milking apparatus 126 was detached prematurely (e.g., using historical milking data stored in milking log 132), controller 110 may not communicate a signal to the actuator coupled to exit gate 136, causing the identified dairy cow 106 to complete another milking rotation (as described above).

Although a particular implementation of system 100 is illustrated and primarily described, the present disclosure contemplates any suitable implementation of system 100, according to particular needs. Moreover, although robotic devices 116 of system 100 have been primarily described as being located at particular positions relative to milking platform 102 and/or preparation stall 112, the present disclosure contemplates any suitable number and combination of robotic devices 116 being positioned at any suitable locations, according to particular needs.

FIGURE 2 illustrates a top view of an alternative example automated rotary milking parlor system 600. System 600 includes a rotary milking platform 102 having a number of milking stalls 104, a rotary drive mechanism 108 coupled to the rotary milking platform 102, a number of robotic devices 116, and a controller 110 including control logic 134 (like-numbered components being substantially similar to those discussed above with regard to FIGURE 1).

Additionally, rather than a preparation stall 1 12 positioned between holding pen 1 14 and milking stalls 104 of rotary milking platform 102, system 600 may include an entrance lane 140. Entrance lane 140 may include any suitable number of walls each constructed of any suitable materials arranged in any suitable configuration operable to encourage the orderly movement of dairy cows. For example, the walls of entrance lane 140 may each include any number and combination of posts, rails, tubing, rods, connectors, cables, wires, and/or beams operable to form a substantially planar barricade such as a fence, wall, and/or other appropriate structure suitable to encourage the orderly movement of dairy cows 106. By decreasing the effective area of holding pen 114 (e.g., using a crowd gate), the dairy cows 106 are encouraged to pass one at a time though entrance lane 140 and into milking stalls 104 of rotary milking platform 102. Entrance lane 140 may additionally include an entrance lane gate 142 for controlling the flow of dairy cows 104 into milking stalls 104 (to prevent dairy cows 106 from becoming injured by attempting to enter a milking stall 104 while rotary milking platform 102 is rotating).

Robotic devices 116 of system 600 may include a preparation robot 116a, an attachment robot 116b, and a post dip robot 116c. Preparation robot 116a may be positioned proximate to rotary milking platform 102 such that preparation robot 116a may extend and retract from between the legs of a dairy cow 106 in a milking stall 104 located at a first rotational position of rotary milking platform 102 (the "preparation position"). Preparation robot 116a may be operable to prepare the teats of a dairy cow 106 in the milking stall 104 located at the preparation position for the attachment of a milking apparatus 126 (e.g., by applying a first sanitizing agent to the teats of the dairy cow 106, cleaning the teats of the dairy cow 106, and stimulating the teats of the dairy cow 106.

Attachment robot 116b may be positioned proximate to rotary milking platform 102 such that attachment robot 116b may extend and retract from between the legs of a dairy cow 106 in a milking stall 104 located at a second rotational position of rotary milking platform 102 (the "attach position"). Attachment robot 116b may be operable to perform functions including attaching a milking apparatus 126 to the teats of a dairy cow 106 in the milking stall 104 located at the attach position. The milking apparatus 126 may be stored beneath the floor of the milking stall 104 (or at any other suitable location) such that the milking apparatus is accessible by attachment robot 116b.

Post dip robot 116c may be positioned proximate to rotary milking platform 102 such that post dip robot 116c may extend and retract from between the legs of a dairy cow 106 in a milking stall 104 located at a third rotational position of rotary milking platform 102 (the "post dip position"). Post dip robot 116c may be operable to perform functions including applying a sanitizing agent to the teats of a dairy cow 106 in the milking stall 104 located at the post dip position. Each of the above-described functions performed by preparation robot 116a, attachment robot 116b, and post dip robot 116c may be performed while rotary milking platform 102 is rotating at a suitable pace.

In certain embodiments, various components of system 600 (e.g., rotary drive mechanism 108 and robotic devices 116) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of system 600, as described below. For example, in response to control logic 134, processor 128 may (1) communicate signals to actuators coupled to gates (e.g., exit gate 136) to initiate opening/closing of those gates, (2) communicate signals to rotary drive mechanism 108 to initiate the starting/stopping of rotary milking platform 102, and (3) communicate signals to robotic devices 116 to initiate performance of the above-described functions associated with those robotic devices 116.

In operation of an example embodiment of system 600, controller 110 may receive a signal indicating that a dairy cow 106 has entered a milking stall 104 of rotary milking platform 102 (e.g., from a presence sensor or from any other suitable component of system 600). Additionally, controller 110 may receive a signal from identification device 120 and may include the identity (e.g., tag number) of the dairy cow 106. Once the identified dairy cow 106 has fully entered a milking stall 104, controller 110 may communicate signals to actuators coupled to entrance lane gate 142 and stall gate 117, the signals causing entrance lane gate 142 and stall gate 117 to close. Additionally, controller 110 may communicate a signal to rotary drive mechanism 108, the signal causing the rotary milking platform 102 to rotate such that the milking stall 104 in which the identified dairy cow 106 is located moves toward a first rotational position of rotary milking platform 102 (the "preparation" position). In certain embodiments, rotary milking platform 102 may already be rotating as the identified dairy cow 106 enters the milking stall 104.

With the milking stall 104 of the identified dairy cow 106 moving through the preparation position, preparation robot 116a (e.g., in response to a signal received from controller 110) may position itself beneath the identified dairy cow 106 and prepare the teats of the identified dairy cow 106 for the attachment of a milking apparatus 126 (e.g., by applying a sanitizing agent to the teats of the identified dairy cow 106, cleaning the teats of the identified dairy cow 106, and stimulating the teats of the identified dairy cow 106).

With the milking stall 104 of the identified dairy cow 106 moving through a second rotational position of rotary milking platform 102 (the "attach" position), attachment robot 116b (e.g., in response to a signal received from controller 110) may position itself beneath the identified dairy cow 106 and attach a milking apparatus 126 to the teats of the identified dairy cow 106. For example, attachment robot 116b may access a milking apparatus 126 corresponding to the milking stall 104 of the identified dairy cow 106 from a known storage position within the milking stall 104 (e.g., beneath the floor of the milking stall 104) and attach the accessed milking apparatus 126 to the teats of the identified dairy cow 106.

As rotary milking platform 102 continues to rotate, the identified dairy cow 106 is milked, with the milking apparatus 126 being detached and withdrawn (e.g., by retracting the milking apparatus 126 to the known storage position within the milking stall 104) once milking is complete. With milking complete, the milking stall 104 in which the identified dairy cow 106 is located continues to rotate toward a third rotational position (the "post dip position").

With the milking stall 104 of the identified dairy cow 106 moving through the post dip position, post dip robot 116c (e.g., in response to a signal received from controller 110) may position itself beneath the identified dairy cow 106 and apply a sanitizing agent to the teats of the identified dairy cow 106. In certain embodiments, the post dip position may be located proximate to an exit gate 136 leading to an exit pen 138. Once post dip robot 116c has applied the sanitizing agent, controller 110 may communicate a signal to an actuator coupled to exit gate 136, the signal initiating the opening of exit gate 136 such that the identified dairy cow 106 may exit the milking stall 104 and enter the exit pen 138. If, however, controller 110 determines either that the identified dairy cow 106 was not fully milked or that the milking apparatus 126 was detached prematurely (e.g., using historical milking data stored in milking log 132), a signal may not be communicated to the actuator coupled to exit gate 136, causing the identified dairy cow 106 to complete another milking rotation (as described above).

Although a particular implementation of system 600 is illustrated and primarily described, the present disclosure contemplates any suitable implementation of system 600, according to particular needs. Moreover, although robotic devices 116 of system 600 have been primarily described as being located at particular positions relative to milking platform 102, the present disclosure contemplates robotic devices 116 being positioned at any suitable locations, according to particular needs.

FIGURE 3 illustrates a top view of an additional alternative example automated rotary milking parlor system 800. System 800 includes a rotary milking platform 102 having a number of milking stalls 104, a rotary drive mechanism 108 coupled to the rotary milking platform, a single robotic device 116, and a controller 1 10 including control logic 134 (like-numbered components being substantially similar to those discussed above with regard to FIGURE 1).

Additionally, rather than a preparation stall 112 positioned between holding pen 114 and milking stalls 104 of rotary milking platform 102, system 800 may include an entrance lane 140. Entrance lane 140 may include any suitable number of walls each constructed of any suitable materials arranged in any suitable configuration operable to encourage the orderly movement of dairy cows 106. For example, the walls of entrance lane 140 may each include any number and combination of posts, rails, tubing, rods, connectors, cables, wires, and/or beams operable to form a substantially planar barricade such as a fence, wall, and/or other appropriate structure suitable to encourage the orderly movement of dairy cows 106. By decreasing the effective area of holding pen 114 (e.g., using a crowd gate), the dairy cows 106 are encouraged to pass one at a time though entrance lane 140 and into milking stalls 104 of rotary milking platform 102. Entrance lane 140 may additionally include an entrance lane gate 142 for controlling the flow of dairy cows 104 into milking stalls 104 (to prevent dairy cows 106 from becoming injured by attempting to enter a milking stall 104 while rotary milking platform 102 is rotating).

The single robotic device 116 of system 800 may be positioned proximate to rotary milking platform 102 such that the single robotic device 116 may (1) extend and retract from between the legs of a dairy cow 106 in a milking stall 104 located at a first rotational position of rotary milking platform 102 (the "preparation position"), (2) extend and retract from between the legs of a dairy cow 106 in a milking stall 104 located at a second rotational position of rotary milking platform 102 (the "attach position"), and (3) extend and retract from between the legs of a dairy cow 106 in a milking stall 104 located at a third rotational position of rotary milking platform 102 (the "post dip position").

With regard to a dairy cow 106 in a stall 104 moving through the preparation position, the single robotic device 116 may be operable to prepare the teats of a dairy cow 106 in the milking stall 104 located at the preparation position for the attachment of a milking apparatus 126 (e.g., by applying a sanitizing agent to the teats of the dairy cow 106, cleaning the teats of the dairy cow 106, and stimulating the teats of a dairy cow 106).

With regard to a dairy cow 106 in a stall 104 moving through the attach position, the single robotic device 116 may be operable to perform functions including attaching a milking apparatus 126 to the teats of a dairy cow 106 in the milking stall 104 located at the attach position. The milking apparatus 126 may be located beneath the floor of the milking stall 104 located at the first rotational position of rotary milking platform 102 (or at any other suitable location) such that the milking apparatus 126 is accessible by the single robotic device 116.

With regard to a dairy cow 106 in a stall 104 moving through the post dip position, the single robotic device 116 may be operable to perform functions including applying a sanitizing agent to the teats of a dairy cow 106 in the milking stall 104 located at the post dip position. Each of the above-described functions performed by the single robotic device 116 may be performed while rotary milking platform 102 is rotating at any suitable pace.

In certain embodiments, various components of system 800 (e.g., rotary drive mechanism 108 and single robotic device 116) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of system 800, as described below. For example, in response to control logic 134, processor 128 may (1) communicate signals to actuators coupled to gates (e.g., exit gate 136) to initiate opening/closing of those gates, (2) communicate signals to rotary drive mechanism 108 to initiate the starting/stopping of rotary milking platform 102, and (3) communicate signals to the single robotic device 116 to initiate performance of the above-described functions associated with single robotic device 116.

In operation of an example embodiment of system 800, controller 110 may receive a signal indicating that a dairy cow 106 has entered a milking stall 104 of rotary milking platform 102 (e.g., from a presence sensor or from any other suitable component of system 800). Additionally, controller 110 may receive a signal from identification device 120 and may include the identity (e.g., tag number) of the dairy cow 106. Once the identified dairy cow 106 has fully entered a milking stall 104, controller 110 may communicate a signal to an actuator coupled to entrance lane gate 142, the signal causing entrance lane gate 142 to close. Additionally, controller 110 may communicate a signal to rotary drive mechanism 108, the signal causing the rotary milking platform 102 to rotate such that the milking stall 104 in which the identified dairy cow 106 is located moves toward a first rotational position of rotary milking platform 102 (the "preparation" position). In certain embodiments, rotary milking platform 102 may already by rotating as the identified dairy cow 106 enters the milking stall 104.

With the milking stall 104 of the identified dairy cow 106 moving through the preparation position, the single robotic device 116 (e.g., in response to a signal received from controller 110) may position itself beneath the identified dairy cow 106 and prepare the teats of the dairy cow 106 for the attachment of a milking apparatus 126. In addition, the single robotic device 116 may (1) position itself beneath a dairy cow 106 in a milking stall 104 moving through the attach position in order to attach a milking apparatus 126 to the teats of that dairy cow 106, and (2) position itself beneath a dairy cow 106 in a milking stall 104 moving through the post dip position in order to apply a sanitizing agent to the teats of that dairy cow 106. The milking stall 104 of the identified dairy cow 106 continues to move from the first rotational position of rotary milking platform 102 (the "preparation" position) toward a second rotational position of rotary milking platform 102 (the "attach" position).

With the milking stall 104 of the identified dairy cow 106 moving through the attach position, the single robotic device 116 (e.g., in response to a signal received from controller 110) may position itself beneath the identified dairy cow 106 and attach a milking apparatus 126 to the teats of the identified dairy cow 106. For example, the single robotic device 116 may access a milking apparatus 126 corresponding to the milking stall 104 of the identified dairy cow 106 from a known storage position within the milking stall 104 (e.g., beneath the floor of the milking stall 104) and attach the accessed milking apparatus 126 to the teats of the identified dairy cow 106. In addition, the single robotic device 116 may (1) position itself beneath a dairy cow 106 in a milking stall 104 moving through the preparation position in order to prepare the teats of that dairy cow 106 for the attachment of a milking apparatus 126, and (2) position itself beneath a dairy cow 106 in a milking stall 104 moving through the post dip position in order to apply a sanitizing agent to the teats of that dairy cow 106.

As rotary milking platform 102 continues to rotate, the identified dairy cow 106 is milked, with the milking apparatus 126 being detached and withdrawn (e.g., by retracting the milking apparatus 126 to the known storage position within the milking stall 104) once milking is complete. With milking complete, the milking stall 104 in which the identified dairy cow 106 is located continues to rotate toward a third rotational position (the "post dip position"). With the milking stall 104 of the identified dairy cow 106 moving through the post dip position, the single robotic device 116 (e.g., in response to a signal received from controller 110) may position itself beneath the identified dairy cow 106 and apply a sanitizing agent to the teats of the identified dairy cow 106. In addition, the single robotic device 116 may (1) position itself beneath a dairy cow 106 in a milking stall 104 moving through the preparation position in order to prepare the teats of that dairy cow 106 for the attachment of a milking apparatus 126, and (2) position itself beneath a dairy cow 106 in a milking stall 104 moving through the attach position in order to attach a milking apparatus 126 to the teats of that dairy cow 106.

In certain embodiments, the post dip position may be located adjacent to an exit gate 136 leading to an exit pen 138. Once single robotic 116 has applied the sanitizing agent, controller 110 may communicate a signal to an actuator coupled to exit gate 136, the signal initiating the opening of exit gate 136 such that the identified dairy cow may exit the milking stall 104 and enter the exit pen 138. If, however, controller 110 determines either that the identified cow was not fully milked or that the milking apparatus was detached prematurely (e.g., using historical milking data stored in milking log 132), a signal may not be communicated to the actuator coupled to exit gate 136, causing the identified dairy cow 106 to complete another milking rotation (as described above).

Although a particular implementation of system 800 is illustrated and primarily described, the present disclosure contemplates any suitable implementation of system 800, according to particular needs. Moreover, although the single robotic devices 116 of system 800 has been primarily described as being located at a particular position relative to milking platform 102, the present disclosure contemplates the single robotic device 116 being positioned at any suitable location, according to particular needs

FIGURES 4A-4C illustrate top views of alternative example automated rotary milking parlor systems 900a-c, according to certain embodiments of the present disclosure. Systems 900a-c include a rotary milking platform 102 having any suitable number of milking stalls 104a-h, a rotary drive mechanism 108 coupled to the rotary milking platform 102, any suitable number of robotic devices 116a-d, an entrance lane 140, an entrance lane gate 142, and an exit gate 136 (like-numbered components being substantially similar to those discussed above with regard to FIGURE 1).

Robotic devices 116a-d of systems 900a-c may include a preparation robot 116a, a first attachment robot 116b, a post dip robot 116c, and a second attachment robot 116d. Preparation robot 116a may be positioned proximate to the outer edge of rotary milking platform 102 such that preparation robot 116a may extend and retract from between the legs of a dairy cow 106 in a milking stall 104 (e.g. milking stall 104b) located at a first rotational position of rotary milking platform 102 (the "preparation position"). Preparation robot 116a may be operable to prepare the teats of a dairy cow 106 in the milking stall 104 located at the preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the preparation position may be located proximate to an entrance lane gate 142. For example, when a first stall 104 (e.g. milking stall 104a) is substantially adjacent to the entrance lane gate 142, an adjacent stall 104 (e.g. milking stall 104b) may be substantially adjacent to the preparation position, as illustrated in FIGURES 4A-4C. As another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 (e.g. milking stall 104a) is substantially adjacent to the entrance lane gate 142, the third stall 104 (e.g. milking stall 104c) may be substantially adjacent to the preparation position. In other words, the entrance lane gate 142 may be separated from the preparation position by one stall (i.e. the second stall 104b, in this example). In certain embodiments, the entrance lane gate 142 may be separated from the preparation position by fewer than three stalls.

First attachment robot 116b may be positioned proximate to the outer edge of rotary milking platform 102 such that first attachment robot 116b may extend and retract from between the legs of a dairy cow 106 in a milking stall 104 (e.g. milking stall 104c) located at a second rotational position of rotary milking platform 102 (the "first attach position"). First attachment robot 116b may be operable to perform functions including attaching a milking apparatus 126 to the teats of a dairy cow 106 in the milking stall 104 located at the first attach position.

In certain embodiments, the first attach position may be located proximate to the preparation position. For example, when a first stall 104 (e.g. milking stall 104b) is substantially adjacent to the preparation position, an adjacent stall 104 (e.g. milking stall 104c) may be substantially adjacent to the first attach position, as illustrated in FIGURES 4A-4C. As another example, a first stall 104 (e.g. milking stall 104b) may be adjacent to a second stall 104 (e.g. milking stall 104c), which in turn is adjacent to a third stall 104 (e.g. milking stall 104d), such that when the first stall 104 (e.g. milking stall 104b) is substantially adjacent to the preparation position, the third stall 104 (e.g. milking stall 104d) may be substantially adjacent to the first attach position. In other words, the preparation position may be separated from the first attach position by one stall (i.e. the second stall 104c, in this example). In certain embodiments, the preparation position may be separated from the first attach position by fewer than three stalls.

Second attachment robot 116d may be positioned proximate to the outer edge of rotary milking platform 102 such that second attachment robot 116d may extend and retract from between the legs of a dairy cow 106 in a milking stall 104 (e.g. milking stall 104d) located at a third rotational position of rotary milking platform 102 (the "second attach position"). Second attachment robot 116d may be operable to perform functions including attaching a milking apparatus 126 to the teats of a dairy cow 106 in the milking stall 104 located at the second attach position. In some embodiments, the milking apparatus 126 may be stored beneath the floor of the milking stall 104 such that the milking apparatus is accessible by first attachment robot 116b and second attachment robot 116d. In other embodiments, the milking apparatus 126 may be stored at any other suitable location accessible by first attachment robot 116b and second attachment robot 116d.

In certain embodiments, the second attach position may be located proximate to the first attach position. In an example which is not part of the presently claimed invention, when a first stall 104 (e.g. milking stall 104c) is substantially adjacent to the first attach position, an adjacent stall 104 (e.g. milking stall 104d) may be substantially adjacent to the second attach position, as illustrated in FIGURES 4A-4C. As an example which is part of the presently claimed invention, a first stall 104 (e.g. milking stall 104c) may be adjacent to a second stall 104 (e.g. milking stall 104d), which in turn is adjacent to a third stall 104 (e.g. milking stall 104e), such that when the first stall 104 (e.g. milking stall 104c) is substantially adjacent to the first attach position, the third stall 104 (e.g. milking stall 104e) may be substantially adjacent to the second attach position. In other words, the first attach position is separated from the second attach position by one stall (i.e. the second stall 104d, in this example). In certain embodiments, the first attach position may be separated from the second attach position by fewer than three stalls.

Post dip robot 116c may be positioned proximate to the outer edge of rotary milking platform 102 such that post dip robot 116c may extend and retract from between the legs of a dairy cow 106 in a milking stall 104 (e.g. milking stall 104g) located at a fourth rotational position of rotary milking platform 102 (the "post dip position"). Post dip robot 116c may be operable to perform functions including applying a sanitizing agent to the teats of a dairy cow 106 in the milking stall 104 located at the post dip position.

In certain embodiments, the post dip position may be located proximate to an exit gate 136. For example, when a first stall 104 (e.g. milking stall 104g) is substantially adjacent to the post dip position, an adjacent stall 104 (e.g. milking stall 104h) may be substantially adjacent to the exit gate 136, as illustrated in FIGURES 4A-4C. As another example, a first stall 104 (e.g. milking stall 104f) may be adjacent to a second stall 104 (e.g. milking stall 104g), which in turn is adjacent to a third stall 104 (e.g. milking stall 104h), such that when the first stall 104 (e.g. milking stall 104f) is substantially adjacent to the post dip position, the third stall 104 (e.g. milking stall 104d) may be substantially adjacent to the exit gate 136. In other words, the post dip position may be separated from the exit gate 136 by one stall (i.e. the second stall 104g, in this example). In certain embodiments, the exit gate 136 may be separated from the post dip position by fewer than three stalls.

Each of the above-described functions performed by preparation robot 116a, first attachment robot 116b, post dip robot 116c, and second attachment robot 116d may be performed while rotary milking platform 102 is substantially stationary or while the rotary milking platform 102 is rotating (as controlled by controller 110 in conjunction with rotary drive mechanism 108, as described in further detail below). For example, one or more of the preparation robot 116a, first attachment robot 116b, second attachment robot 116d, and post dip robot 116c may be operable to move along the perimeter of rotary milking platform 102 or along a tangent to rotary milking platform 102 as rotary milking platform 102 rotates (e.g. in response to a signal from controller 110), allowing the robotic arm to track the movement of a dairy cow 106 located in a milking stall 104 of rotary milking platform 102. In certain embodiments, the rotary milking platform 102 may rotate at a suitable speed in order to allow each of robotic devices 116a-d sufficient time to perform its functions on a dairy cow 106 in a first milking stall 104 (e.g. milking stall 104b) before moving on to a dairy cow 106 in a second milking stall 104 (e.g. milking stall 104a). For example, rotary milking platform 102 may rotate at a speed that provides a window of 6-10 seconds for a given robotic device 116 (e.g. preparation robot 116a) to perform its function while a particular stall (e.g. milking stall 104b) is substantially adjacent to the location of that robotic device 116 (e.g. the preparation position).

As described in connection with FIGURE 1, in certain embodiments, various components of systems 900a-c (e.g., rotary drive mechanism 108 and robotic devices 116a-d) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of systems 900a-c, as described below. For example, in response to control logic 134, processor 128 may (1) communicate signals to actuators coupled to gates (e.g., exit gate 136) to initiate opening/closing of those gates, (2) communicate signals to rotary drive mechanism 108 to initiate the starting/stopping of rotary milking platform 102, and (3) communicate signals to robotic devices 116a-d to initiate performance of the above-described functions associated with those robotic devices 116a-d.

In some embodiments, each robotic device 116 (e.g. preparation robotic 116a) may be operable to detect whether the milking platform 102 has rotated such that a particular milking stall 104 is substantially adjacent to its location (e.g. the preparation position). Each robotic device 116 may then perform its associated function on a dairy cow 106 located in the particular milking stall 104. In other embodiments, controller 110 may be operable to determine whether the milking platform 102 has rotated such that a particular milking stall 104 is substantially adjacent to a particular robotic device 116. Controller 110 may then communicate signals to the particular robotic device 116, the signals causing the particular robotic device 116 to perform its associated function on a dairy cow 106 located in the particular milking stall 104.

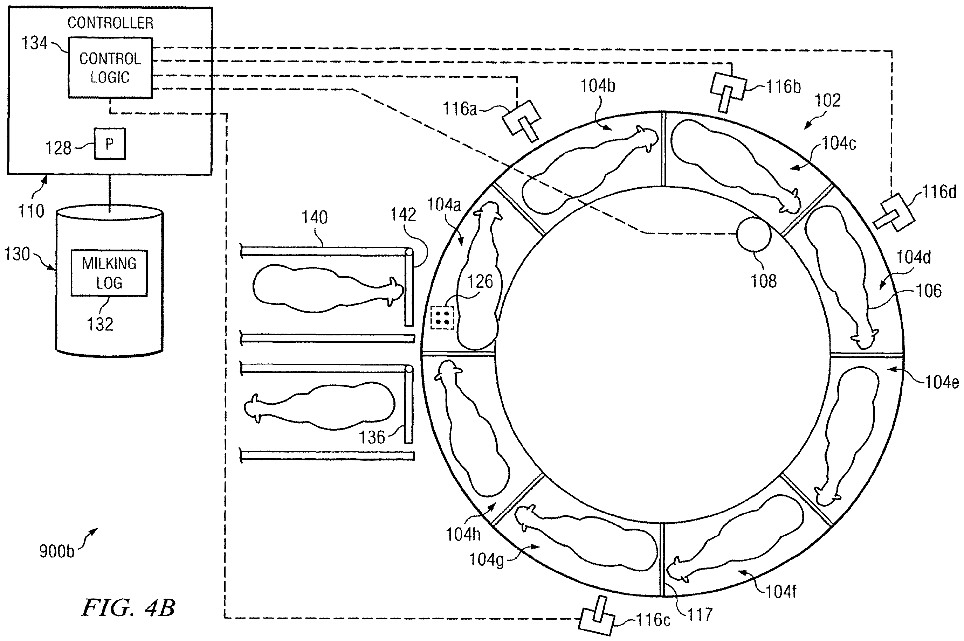

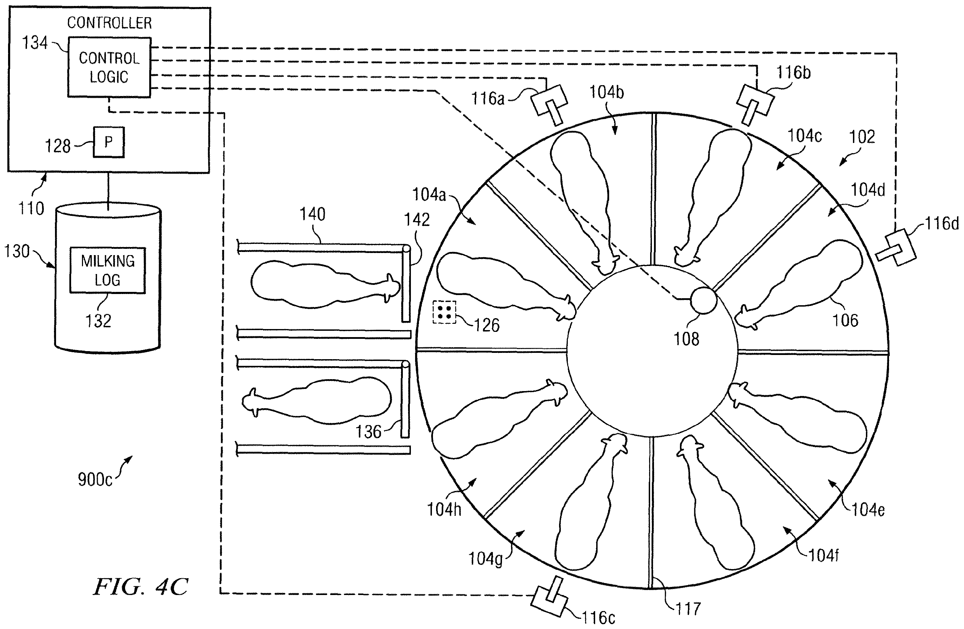

Numerous arrangements of milking stalls 104a-h on rotary milking platform 102 are possible. In the example of FIGURE 4A, milking stalls 104a-h are arranged in a herringbone pattern on rotary milking platform 102, such that milking stalls 104ah are oriented on a bias relative to the perimeter of milking platform 102. In this configuration, robotic devices 116a-d may extend and retract from between the legs of a dairy cow 106 located in a milking stall 104 from the side (i.e. between a front leg and a hind leg). In the example of FIGURE 4B, milking stalls 104a-h are arranged in a tandem configuration, such that the front of a dairy cow 106 in a first milking stall 104 is adjacent to the rear of a dairy cow 106 in an adjacent milking stall 104. In this configuration, robotic devices 116a-d may extend and retract from between the legs of a dairy cow 106 located in a milking stall 104 from the side (i.e. between a front leg and a hind leg). In the example of FIGURE 4C, milking stalls 104a-h are arranged in a side-by-side configuration, such that a dairy cow 106 in each milking stall 104 faces the middle of rotary milking platform 102. In this configuration, robotic devices 116a-d may extend and retract from between the legs of a dairy cow 106 located in a milking stall 104 from the rear (i.e. between its hind legs). Although rotary milking platforms 102 having particular numbers of stalls 104a-h in particular configurations are illustrated, the present disclosure contemplates a rotary milking platform 102 having any suitable number of stalls 104a-h in any suitable configuration.

In operation of an example embodiment of systems 900a-c, controller 110 may receive a signal indicating that a dairy cow 106 has entered milking stall 104a of rotary milking platform 102 (e.g., from a presence sensor or from any other suitable component of systems 900a-c). Once the dairy cow 106 has fully entered milking stall 104a, controller 110 may communicate signals to actuators coupled to entrance lane gate 142 and stall gate 117, the signals causing entrance lane gate 142 and stall gate 117 to close. Additionally, controller 110 may communicate a signal to rotary drive mechanism 108, the signal causing the rotary milking platform 102 to rotate such that the milking stall 104a in which the dairy cow 106 is located moves toward the preparation position. In certain embodiments, rotary milking platform 102 may already be rotating as the dairy cow 106 enters the milking stall 104a.

With the milking stall 104a of the dairy cow 106 moving through the preparation position, preparation robot 116a (e.g., in response to a signal received from controller 110) may extend between the legs of the dairy cow 106 and prepare the teats of the dairy cow 106 for the attachment of a milking apparatus 126 (e.g., by applying a sanitizing agent to the teats of the dairy cow 106, cleaning the teats of the dairy cow 106, and stimulating the teats of the dairy cow 106), while the rotary milking platform 102 continues to rotate, such that the milking stall 104a of the dairy cow 106 moves toward the first attach position.

With the milking stall 104a of the dairy cow 106 moving through the first attach position, first attachment robot 116b (e.g., in response to a signal received from controller 110) may extend between the legs of the dairy cow 106 and attach a milking apparatus 126 to one or more teats of the dairy cow 106, while the rotary milking platform 102 continues to rotate, such that the milking stall 104a of the dairy cow 106 moves toward the second attach position. For example, first attachment robot 116b may access a milking apparatus 126 corresponding to the milking stall 104a of the dairy cow 106 from a known storage position within the milking stall 104 (e.g., beneath the floor of the milking stall 104a) and attach the accessed milking apparatus 126 to one or more teats of the dairy cow 106.

With the milking stall 104a of the dairy cow 106 moving through the second attach position, second attachment robot 116d (e.g., in response to a signal received from controller 110) may extend between the legs of the dairy cow 106 and attach a milking apparatus 126 to one or more teats of the dairy cow 106, while the rotary milking platform 102 continues to rotate, such that the milking stall 104a of the dairy cow 106 moves toward the post-dip position. For example, second attachment robot 116d may access a milking apparatus 126 corresponding to the milking stall 104a of the dairy cow 106 from a known storage position within the milking stall 104a (e.g., beneath the floor of the milking stall 104a) and attach the accessed milking apparatus 126 to one or more teats of the dairy cow 106 which were not attached by the first attachment robot 116b.

As rotary milking platform 102 continues to rotate, the dairy cow 106 is milked, with the milking apparatus 126 being detached and withdrawn (e.g., by retracting the milking apparatus 126 to the known storage position within the milking stall 104a) once milking is complete.

With the milking stall 104a of the dairy cow 106 moving through the post dip position, post dip robot 116c (e.g., in response to a signal received from controller 110) may extend between the legs of the dairy cow 106 and apply a sanitizing agent to the teats of the dairy cow 106. Once post dip robot 116c has applied the sanitizing agent, controller 110 may communicate a signal to an actuator coupled to exit gate 136, the signal initiating the opening of exit gate 136 such that the dairy cow 106 may exit the milking stall 104a. If, however, controller 110 determines either that the dairy cow 106 was not fully milked or that the milking apparatus 126 was detached prematurely (e.g., using historical milking data stored in milking log 132), a signal may not be communicated to the actuator coupled to exit gate 136, causing the dairy cow 106 to complete another milking rotation (as described above).

Although a particular implementation of systems 900a-c is illustrated and primarily described, the present disclosure contemplates any suitable implementation of systems 900a-c, according to particular needs. Moreover, although robotic devices 116a-d of systems 900a-c have been primarily described as being located at particular positions relative to milking platform 102, the present disclosure contemplates robotic devices 116a-d being positioned at any suitable locations, according to particular needs.

In the example of FIGURES 4A-4C, the robotic devices are located along the outer perimeter of the rotary milking platform. In certain other embodiments, the robotic devices may be located along the inner perimeter of the rotary milking platform. FIGURES 5A-5C illustrate top views of alternative example automated rotary milking parlor systems 1000a-c, according to certain embodiments of the present disclosure. Systems 1000a-c include a rotary milking platform 102 having any suitable number of milking stalls 104a-h, a rotary drive mechanism 108 coupled to the rotary milking platform 102, any suitable number of robotic devices 116a-d, an entrance lane 140, an entrance lane gate 142, and an exit gate 136 (like-numbered components being substantially similar to those discussed above with regard to FIGURE 1).

Robotic devices 116a-d of systems 1000a-c may include a preparation robot 116a, a first attachment robot 116b, a post dip robot 116c, and a second attachment robot 116d. Preparation robot 116a may be positioned proximate to the inner edge of rotary milking platform 102 such that preparation robot 116a may extend and retract from between the legs of a dairy cow 106 in a milking stall 104 (e.g. milking stall 104b) located at the preparation position. Preparation robot 116a may be operable to prepare the teats of a dairy cow 106 in the milking stall 104 located at the preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the preparation position may be located proximate to an entrance lane gate 142. For example, when a first stall 104 (e.g. milking stall 104a) is substantially adjacent to the entrance lane gate 142, an adjacent stall 104 (e.g. milking stall 104b) may be substantially adjacent to the preparation position, as illustrated in FIGURES 5A-5C. As another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 (e.g. milking stall 104a) is substantially adjacent to the entrance lane gate 142, the third stall 104 (e.g. milking stall 104c) may be substantially adjacent to the preparation position. In other words, the entrance lane gate 142 may be separated from the preparation position by one stall (i.e. the second stall 104b, in this example). In certain embodiments, the entrance lane gate 142 may be separated from the preparation position by fewer than three stalls.

First attachment robot 116b may be positioned proximate to the inner edge of rotary milking platform 102 such that first attachment robot 116b may extend and retract from between the legs of a dairy cow 106 in a milking stall 104 (milking stall 104c) located at the first attach position. First attachment robot 116b may be operable to perform functions including attaching a milking apparatus 126 to the teats of a dairy cow 106 in the milking stall 104 located at the first attach position.

In certain embodiments, the first attach position may be located proximate to the preparation position. For example, when a first stall 104 (e.g. milking stall 104b) is substantially adjacent to the preparation position, an adjacent stall 104 (e.g. milking stall 104c) may be substantially adjacent to the first attach position, as illustrated in FIGURES 5A-5C. As another example, a first stall 104 (e.g. milking stall 104b) may be adjacent to a second stall 104 (e.g. milking stall 104c), which in turn is adjacent to a third stall 104 (e.g. milking stall 104d), such that when the first stall 104 is substantially adjacent to the preparation position, the third stall 104 may be substantially adjacent to the first attach position. In other words, the preparation position may be separated from the first attach position by one stall (i.e. the second stall 104c, in this example). In certain embodiments, the preparation position may be separated from the first attach position by fewer than three stalls.

Second attachment robot 116d may be positioned proximate to the inner edge of rotary milking platform 102 such that second attachment robot 1 16d may extend and retract from between the legs of a dairy cow 106 in a milking stall 104 (e.g. milking stall 104d) located at the second attach position. Second attachment robot 116d may be operable to perform functions including attaching a milking apparatus 126 to the teats of a dairy cow 106 in the milking stall 104 located at the second attach position. In some embodiments, the milking apparatus 126 may be stored beneath the floor of the milking stall 104 such that the milking apparatus is accessible by first attachment robot 116b and second attachment robot 116d. In other embodiments, the milking apparatus 126 may be stored at any other suitable location accessible by first attachment robot 116b and second attachment robot 116d.

In certain embodiments, the second attach position may be located proximate to the first attach position. In an example which is not part of the presently claimed invention, when a first stall 104 (e.g. milking stall 104c) is substantially adjacent to the first attach position, an adjacent stall 104 (e.g. milking stall 104d) may be substantially adjacent to the second attach position, as illustrated in FIGURES 5A-5C. As an example which is part of the presently claimed invention, a first stall 104 (e.g. milking stall 104c) may be adjacent to a second stall 104 (e.g. milking stall 104d), which in turn is adjacent to a third stall 104 (e.g. milking stall 104e), such that when the first stall 104 is substantially adjacent to the first attach position, the third stall 104 may be substantially adjacent to the second attach position. In other words, the first attach position is separated from the second attach position by one stall (i.e. the second stall 104d, in this example). In certain embodiments, the first attach position may be separated from the second attach position by fewer than three stalls.

Post dip robot 116c may be positioned proximate to the inner edge of rotary milking platform 102 such that post dip robot 116c may extend and retract from between the legs of a dairy cow 106 in a milking stall 104 (e.g. milking stall 104g) located at the post dip position. Post dip robot 116c may be operable to perform functions including applying a sanitizing agent to the teats of a dairy cow 106 in the milking stall 104 located at the post dip position.

In certain embodiments, the post dip position may be located proximate to an exit gate 136. For example, when a first stall 104 (e.g. milking stall 104h) is substantially adjacent to the exit gate 136, an adjacent stall 104 (e.g. milking stall 104g) may be substantially adjacent to the post dip position, as illustrated in FIGURES 5A-5C. As another example, a first stall 104 (e.g. milking stall 104h) may be adjacent to a second stall 104 (e.g. milking stall 104g), which in turn is adjacent to a third stall 104 (e.g. milking stall 104f), such that when the first stall 104 is substantially adjacent to the exit gate 136, the third stall 104 may be substantially adjacent to the post dip position. In other words, the exit gate 136 may be separated from the post dip position by one stall (i.e. the second stall 104g, in this example). In certain embodiments, the exit gate 136 may be separated from the post dip position by fewer than three stalls.

Each of the above-described functions performed by preparation robot 116a, first attachment robot 116b, post dip robot 116c, and second attachment robot 116d may be performed while rotary milking platform 102 is substantially stationary or while the rotary milking platform 102 is rotating (as controlled by controller 110 in conjunction with rotary drive mechanism 108, as described in further detail below). For example, one or more of the preparation robot 116a, first attachment robot 116b, second attachment robot 116d, and post dip robot 116c may be operable to move along the perimeter of rotary milking platform 102 or along a tangent to rotary milking platform 102 as rotary milking platform 102 rotates (e.g. in response to a signal from controller 110), allowing the robotic arm to track the movement of a dairy cow 106 located in a milking stall 104 of rotary milking platform 102. In certain embodiments, the rotary milking platform 102 may rotate at a suitable speed in order to allow each of robotic device 116a-d sufficient time to perform its functions on a dairy cow 106 in a first milking stall 104 (e.g. milking stall 104b) before moving on to a dairy cow 106 in a second milking stall 104 (e.g. milking stall 104a).

As described in connection with FIGURE 1, in certain embodiments, various components of systems 1000a-c (e.g., rotary drive mechanism 108 and robotic devices 116a-d) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of systems 1000a-c, as described below. For example, in response to control logic 134, processor 128 may (1) communicate signals to actuators coupled to gates (e.g., exit gate 136) to initiate opening/closing of those gates, (2) communicate signals to rotary drive mechanism 108 to initiate the starting/stopping of rotary milking platform 102, and (3) communicate signals to robotic devices 116a-d to initiate performance of the above-described functions associated with those robotic devices 116a-d.

In some embodiments, each robotic device 116 (e.g. preparation robotic 116a) may be operable to detect whether the milking platform 102 has rotated such that a particular milking stall 104 is substantially adjacent to its location (e.g. the preparation position). Each robotic device 116 may then perform its associated function on a dairy cow 106 located in the particular milking stall 104. In other embodiments, controller 110 may be operable to determine whether the milking platform 102 has rotated such that a particular milking stall 104 is substantially adjacent to a particular robotic device 116. Controller 110 may then communicate signals to the particular robotic device 116, the signals causing the particular robotic device 116 to perform its associated function on a dairy cow 106 located in the particular milking stall 104.

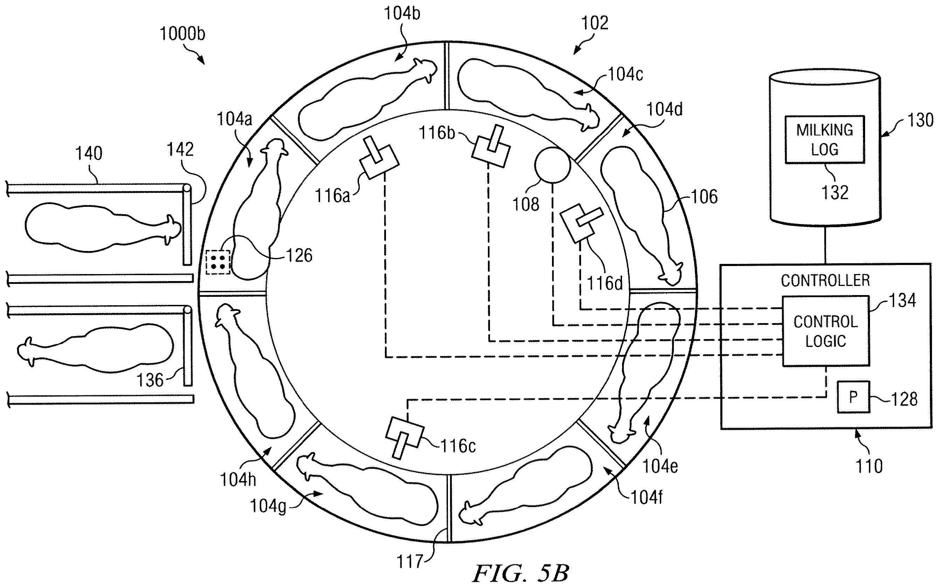

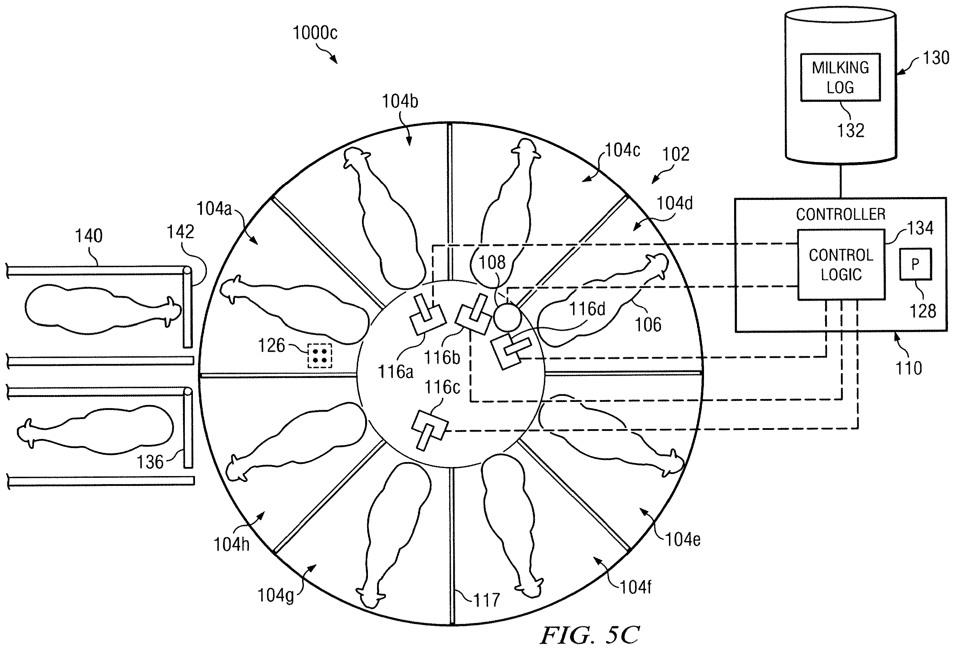

Numerous arrangements of milking stalls 104a-h on rotary milking platform 102 are possible. In the example of FIGURE 5A, milking stalls 104a-h are arranged in a herringbone pattern on rotary milking platform 102, such that milking stalls 104ah are oriented on a bias relative to the perimeter of milking platform 102. In this configuration, robotic devices 116a-d may extend and retract from between the legs of a dairy cow 106 located in a milking stall 104 from the side (i.e. between a front leg and a hind leg). In the example of FIGURE 5B, milking stalls 104a-h are arranged in a tandem configuration, such that the front of a dairy cow 106 in a first milking stall 104 is adjacent to the rear of a dairy cow 106 in an adjacent milking stall 104. In this configuration, robotic devices 116a-d may extend and retract from between the legs a dairy cow 106 located in a milking stall 104 from the side (i.e. between a front leg and a hind leg). In the example of FIGURE 5C, milking stalls 104a-h are arranged in a side-by-side configuration, such that a dairy cow 106 in each milking stall 104 faces away from the middle of rotary milking platform 102. In this configuration, robotic devices 116a-d may extend and retract from between the legs of a dairy cow 106 located in a milking stall 104 from the rear (i.e. between its hind legs). Although rotary milking platforms 102 having particular numbers of stalls 104a-h in particular configurations are illustrated, the present disclosure contemplates a rotary milking platform 102 having any suitable number of stalls 104a-h in any suitable configuration.

In operation of an example embodiment of systems 1000a-c, controller 110 may receive a signal indicating that a dairy cow 106 has entered a milking stall 104 (e.g. milking stall 104a) of rotary milking platform 102 (e.g., from a presence sensor or from any other suitable component of systems 900a-c). Once the dairy cow 106 has fully entered milking stall 104a, controller 110 may communicate signals to actuators coupled to entrance lane gate 142 and stall gate 117, the signals causing entrance lane gate 142 and stall gate 117 to close. Additionally, controller 110 may communicate a signal to rotary drive mechanism 108, the signal causing the rotary milking platform 102 to rotate such that the milking stall 104a in which the dairy cow 106 is located moves toward the preparation position. In certain embodiments, rotary milking platform 102 may already be rotating as the dairy cow 106 enters the milking stall 104.

With the milking stall 104a of the dairy cow 106 moving through the preparation position, preparation robot 116a (e.g., in response to a signal received from controller 110) may extend between the legs of the dairy cow 106 and prepare the teats of the dairy cow 106 for the attachment of a milking apparatus 126 (e.g., by applying a sanitizing agent to the teats of the dairy cow 106, cleaning the teats of the dairy cow 106, and stimulating the teats of the dairy cow 106)., while the rotary milking platform 102 continues to rotate, such that the milking stall 104a of the dairy cow 106 moves toward the first attach position.

With the milking stall 104a of the dairy cow 106 moving through the first attach position, first attachment robot 116b (e.g., in response to a signal received from controller 110) may extend between the legs of the dairy cow 106 and attach a milking apparatus 126 to one or more teats of the dairy cow 106, while the rotary milking platform 102 continues to rotate, such that the milking stall 104a of the dairy cow 106 moves toward the second attach position. For example, first attachment robot 116b may access a milking apparatus 126 corresponding to the milking stall 104a of the dairy cow 106 from a known storage position within the milking stall 104a (e.g., beneath the floor of the milking stall 104a) and attach the accessed milking apparatus 126 to one or more teats of the dairy cow 106.

With the milking stall 104 of the dairy cow 106 moving through the second attach position, second attachment robot 116d (e.g., in response to a signal received from controller 110) may extend between the legs of the dairy cow 106 and attach a milking apparatus 126 to one or more teats of the dairy cow 106., while the rotary milking platform 102 continues to rotate, such that the milking stall 104a of the dairy cow 106 moves toward the post-dip position. For example, second attachment robot 116d may access a milking apparatus 126 corresponding to the milking stall 104a of the dairy cow 106 from a known storage position within the milking stall 104a (e.g., beneath the floor of the milking stall 104a) and attach the accessed milking apparatus 126 to one or more teats of the dairy cow 106 which were not attached by the first attachment robot 116b.

As rotary milking platform 102 continues to rotate, the dairy cow 106 is milked, with the milking apparatus 126 being detached and withdrawn (e.g., by retracting the milking apparatus 126 to the known storage position within the milking stall 104a) once milking is complete.

With the milking stall 104a of the dairy cow 106 moving through the post dip position, post dip robot 116c (e.g., in response to a signal received from controller 110) may extend between the legs of the dairy cow 106 and apply a sanitizing agent to the teats of the dairy cow 106. Once post dip robot 116c has applied the sanitizing agent, controller 110 may communicate a signal to an actuator coupled to exit gate 136, the signal initiating the opening of exit gate 136 such that the dairy cow 106 may exit the milking stall 104a. If, however, controller 110 determines either that the dairy cow 106 was not fully milked or that the milking apparatus 126 was detached prematurely (e.g., using historical milking data stored in milking log 132), a signal may not be communicated to the actuator coupled to exit gate 136, causing the dairy cow 106 to complete another milking rotation (as described above).

Although a particular implementation of systems 1000a-c is illustrated and primarily described, the present disclosure contemplates any suitable implementation of systems 1000a-c, according to particular needs. Moreover, although robotic devices 116a-d of systems 1000a-c have been primarily described as being located at particular positions relative to milking platform 102, the present disclosure contemplates robotic devices 116a-d being positioned at any suitable locations, according to particular needs.

In the examples of FIGURES 4A-4C and FIGURES 5A-5C, the rotary milking platform includes a single entry and a single exit. In certain other embodiments, the rotary milking platform may include multiple entries and exits. FIGURES 6A-6C illustrate top views of alternative example automated rotary milking parlor systems 1100a-c, according to certain embodiments of the present disclosure. Systems 1100a-c include a rotary milking platform 102 having any suitable number of milking stalls 104a-h, a rotary drive mechanism 108 coupled to the rotary milking platform 102, any suitable number of robotic devices 116a-h, entrance lanes 140a-b, entrance gates 142a-b, and exit gates 136a-b (like-numbered components being substantially similar to those discussed above with regard to FIGURE 1).

In certain embodiments, first entrance gate 142a may be located near second exit gate 136b and across rotary milking platform 102 from first exit gate 136a, such that a dairy cow 106 entering rotary milking platform 102 at first entrance gate 142a and exiting at first exit gate 136a may rotate through half of the circumference of rotary milking platform 102 during milking. Likewise, second entrance gate 142b may be located near first exit gate 136a across rotary milking platform 102 from second exit gate 136b, such that a dairy cow 106 entering rotary milking platform 102 at second entrance gate 142b and exiting at second exit gate 136b may rotate through half of the circumference of rotary milking platform 102 during milking. In some embodiments, because a given cow may only rotate through half of the circumference of rotary milking platform 102 during milking, rotary milking platform 102 may rotate at a slower speed, as compared to some embodiments of a rotary milking platform with a single entry and exit, in order to allow sufficient time to complete the milking process. For example, rotary milking platform 102 may rotate at a speed that provides a window of 12-20 seconds for a given robotic device 116 (e.g. preparation robot 116a) to perform its function while a particular stall is substantially adjacent to the location of that robotic device 116 (e.g. the preparation position).

Robotic devices 116a-h of systems 1100a-c may include a first preparation robot 116a, a first attachment robot 116b, a first post dip robot 116c, a second attachment robot 116d, a second preparation robot 116e, a third attachment robot 116f, a fourth attachment robot 116g, and a second post dip robot 116h. First preparation robot 116a may be positioned proximate to the outer edge of rotary milking platform 102 such that first preparation robot 116a may extend and retract from between the legs of a dairy cow 106 in a milking stall 104 (e.g. milking stall 104a) located at a first rotational position of rotary milking platform 102 (the "first preparation position"). First preparation robot 116a may be operable to prepare the teats of a dairy cow 106 in the milking stall 104 located at the first preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the first preparation position may be located proximate to the first entrance lane gate 142a. For example, when a first stall 104 (e.g. milking stall 104a) is substantially adjacent to the first entrance lane gate 142a, the first stall 104 may also be substantially adjacent to the first preparation position, as illustrated in FIGURES 6A-6C. As another example, when a first stall 104 (e.g. milking stall 104a) is substantially adjacent to the first entrance lane gate 142a, an adjacent stall 104 (e.g. milking stall 104b) may be substantially adjacent to the first preparation position. As yet another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 is substantially adjacent to the first entrance lane gate 142a, the third stall 104 may be substantially adjacent to the first preparation position. In other words, the first entrance lane gate 142a may be separated from the first preparation position by one stall (i.e. the second stall 104b, in this example). In certain embodiments, the first entrance lane gate 142a may be separated from the first preparation position by fewer than three stalls.

First attachment robot 116b may be positioned proximate to the outer edge of rotary milking platform 102 such that first attachment robot 116b may extend and retract from between the legs of a dairy cow 106 in a milking stall 104 (e.g. milking stall 104b) located at the first attach position. First attachment robot 116b may be operable to perform functions including attaching a milking apparatus 126 to the teats of a dairy cow 106 in the milking stall 104 located at the first attach position.

In certain embodiments, the first attach position may be located proximate to the first preparation position. For example, when a first stall 104 (e.g. milking stall 104a) is substantially adjacent to the first preparation position, an adjacent stall 104 may be substantially adjacent to the first attach position (e.g. milking stall 104b), as illustrated in FIGURES 6A-6C. As another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 is substantially adjacent to the first preparation position, the third stall 104 may be substantially adjacent to the first attach position. In other words, the first preparation position may be separated from the first attach position by one stall (i.e. the second stall 104b, in this example). In certain embodiments, the first preparation position may be separated from the first attach position by fewer than three stalls.

Second attachment robot 116d may be positioned proximate to the outer edge of rotary milking platform 102 such that second attachment robot 116d may extend and retract from between the legs of a dairy cow 106 in a milking stall 104 (e.g. milking stall 104c) located at the second attach position. Second attachment robot 116d may be operable to perform functions including attaching a milking apparatus 126 to the teats of a dairy cow 106 in the milking stall 104 located at the second attach position. In some embodiments, the milking apparatus 126 may be stored beneath the floor of the milking stall 104 such that the milking apparatus is accessible by first attachment robot 116b and second attachment robot 116d. In other embodiments, the milking apparatus 126 may be stored at any other suitable location accessible by first attachment robot 116b and second attachment robot 116d.

In certain embodiments, the second attach position may be located proximate to the first attach position. In an example which is not part of the presently claimed invention, when a first stall 104 (e.g. milking stall 104b) is substantially adjacent to the first attach position, an adjacent stall 104 may be substantially adjacent to the second attach position (e.g. milking stall 104c), as illustrated in FIGURES 6A-6C. As an example which is part of the presently claimed invention, a first stall 104 (e.g. milking stall 104b) may be adjacent to a second stall 104 (e.g. milking stall 104c), which in turn is adjacent to a third stall 104 (e.g. milking stall 104d), such that when the first stall 104 is substantially adjacent to the first attach position, the third stall 104 may be substantially adjacent to the second attach position. In other words, the first attach position is separated from the second attach position by one stall (i.e. the second stall 104c, in this example). In certain embodiments, the first attach position may be separated from the second attach position by fewer than three stalls.

First post dip robot 116c may be positioned proximate to the outer edge of rotary milking platform 102 such that first post dip robot 116c may extend and retract from between the legs of a dairy cow 106 in a milking stall 104 (e.g. milking stall 104d) located at a fourth rotational position of rotary milking platform 102 (the "first post dip position"). First post dip robot 116c may be operable to perform functions including applying a sanitizing agent to the teats of a dairy cow 106 in the milking stall 104 located at the first post dip position.

In certain embodiments, the first post dip position may be located proximate to a first exit gate 136a. For example, when a first stall 104 (e.g. milking stall 104d) is substantially adjacent to the first exit gate 136a, the first stall 104 may also be substantially adjacent to the first post dip position, as illustrated in FIGURES 6A-6C. As another example, when a first stall 104 (e.g. milking stall 104d) is substantially adjacent to the first exit gate 136a, an adjacent stall 104 (e.g. milking stall 104c) may be substantially adjacent to the first post dip position. As yet another example, a first stall 104 (e.g. milking stall 104d) may be adjacent to a second stall 104 (e.g. milking stall 104c), which in turn is adjacent to a third stall 104 (e.g. milking stall 104b), such that when the first stall 104 is substantially adjacent to the first exit gate 136a, the third stall 104 may be substantially adjacent to the first post dip position. In other words, the first exit gate 136a may be separated from the first post dip position by one stall (i.e. the second stall 104c, in this example). In certain embodiments, the first exit gate 136a may be separated from the first post dip position by fewer than three stalls.

Second preparation robot 116e may be positioned proximate to the outer edge of rotary milking platform 102 such that second preparation robot 116e may extend and retract from between the legs of a dairy cow 106 in a milking stall 104 (e.g. milking stall 104e) located at a fifth rotational position of rotary milking platform 102 (the "second preparation position"). Second preparation robot 116e may be operable to prepare the teats of a dairy cow 106 in the milking stall 104 located at the second preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the second preparation position may be located proximate to the second entrance lane gate 142b. For example, when a first stall 104 (e.g. milking stall 104e) is substantially adjacent to the second entrance lane gate 142b, the first stall 104 may also be substantially adjacent to the second preparation position, as illustrated in FIGURES 6A-6C. As another example, when a first stall 104 (e.g. milking stall 104e) is substantially adjacent to the second entrance lane gate 142b, an adjacent stall 104 (e.g. milking stall 104f) may be substantially adjacent to the second preparation position. As yet another example, a first stall 104 (e.g. milking stall 104e) may be adjacent to a second stall 104 (e.g. milking stall 104f), which in turn is adjacent to a third stall 104 (e.g. milking stall 104g), such that when the first stall 104 is substantially adjacent to the second entrance lane gate 142b, the third stall 104 may be substantially adjacent to the second preparation position. In other words, the second entrance lane gate 142b may be separated from the second preparation position by one stall (i.e. the second stall 104f, in this example). In certain embodiments, the second entrance lane gate 142b may be separated from the second preparation position by fewer than three stalls.

Third attachment robot 116f may be positioned proximate to the outer edge of rotary milking platform 102 such that third attachment robot 116f may extend and retract from between the legs of a dairy cow 106 in a milking stall 104 (e.g. milking stall 104f) located at a sixth rotational position of rotary milking platform 102 (the "third attach position"). Third attachment robot 116f may be operable to perform functions including attaching a milking apparatus 126 to the teats of a dairy cow 106 in the milking stall 104 located at the third attach position.

In certain embodiments, the third attach position may be located proximate to the second preparation position. For example, when a first stall 104 (e.g. milking stall 104e) is substantially adjacent to the second preparation position, an adjacent stall 104 (e.g. milking stall 104f) may be substantially adjacent to the third attach position, as illustrated in FIGURES 6A-6C. As another example, a first stall 104 (e.g. milking stall 104e) may be adjacent to a second stall 104 (e.g. milking stall 104f), which in turn is adjacent to a third stall 104 (e.g. milking stall 104g), such that when the first stall 104 is substantially adjacent to the second preparation position, the third stall 104 may be substantially adjacent to the third attach position. In other words, the second preparation position may be separated from the third attach position by one stall (i.e. the second stall 104f, in this example). In certain embodiments, the second preparation position may be separated from the third attach position by fewer than three stalls.

Fourth attachment robot 116g may be positioned proximate to the outer edge of rotary milking platform 102 such that fourth attachment robot 116g may extend and retract from between the legs of a dairy cow 106 in a milking stall 104 (e.g. milking stall 104g) located at a seventh rotational position of rotary milking platform 102 (the "fourth attach position"). Fourth attachment robot 116g may be operable to perform functions including attaching a milking apparatus 126 to the teats of a dairy cow 106 in the milking stall 104 located at the fourth attach position. In some embodiments, the milking apparatus 126 may be stored beneath the floor of the milking stall 104 such that the milking apparatus is accessible by first attachment robot 116b and second attachment robot 116d. In other embodiments, the milking apparatus 126 may be stored at any other suitable location accessible by third attachment robot 116f and fourth attachment robot 116g.

In certain embodiments, the fourth attach position may be located proximate to the third attach position. For example, when a first stall 104 (e.g. milking stall 104f) is substantially adjacent to the third attach position, an adjacent stall 104 (e.g. milking stall 104g) may be substantially adjacent to the fourth attach position, as illustrated in FIGURES 6A-6C. As another example, a first stall 104 (e.g. milking stall 104f) may be adjacent to a second stall 104 (e.g. milking stall 104g), which in turn is adjacent to a third stall 104 (e.g. milking stall 104h), such that when the first stall 104 is substantially adjacent to the third attach position, the third stall 104 may be substantially adjacent to the fourth attach position. In other words, the third attach position may be separated from the fourth attach position by one stall (i.e. the second stall 104g, in this example). In certain embodiments, the third attach position may be separated from the fourth attach position by fewer than three stalls.

Second post dip robot 116h may be positioned proximate to the outer edge of rotary milking platform 102 such that second post dip robot 116h may extend and retract from between the legs of a dairy cow 106 in a milking stall 104 (e.g. milking stall 104h) located at an eighth rotational position of rotary milking platform 102 (the "second post dip position"). Second post dip robot 116h may be operable to perform functions including applying a sanitizing agent to the teats of a dairy cow 106 in the milking stall 104 located at the second post dip position.

In certain embodiments, the second post dip position may be located proximate to a second exit gate 136b. For example, when a first stall 104 (e.g. milking stall 104h) is substantially adjacent to the second exit gate 136b, the first stall 104 may also be substantially adjacent to the second post dip position, as illustrated in FIGURES 6A-6C. As another example, when a first stall 104 (e.g. milking stall 104h) is substantially adjacent to the second exit gate 136b, an adjacent stall 104 (e.g. milking stall 104g) may be substantially adjacent to the second post dip position. As yet another example, a first stall 104 (e.g. milking stall 104h) may be adjacent to a second stall 104 (e.g. milking stall 104g), which in turn is adjacent to a third stall 104 (e.g. milking stall 104f), such that when the first stall 104 is substantially adjacent to the second exit gate 136b, the third stall 104 may be substantially adjacent to the second post dip position. In other words, the second exit gate 136b may be separated from the second post dip position by one stall (i.e. the second stall 104g, in this example). In certain embodiments, the second exit gate 136b may be separated from the second post dip position by fewer than three stalls.

Each of the above-described functions performed by first preparation robot 116a, first attachment robot 116b, first post dip robot 116c, second attachment robot 116d, second preparation robot 116e, third attachment robot 116f, fourth attachment robot 116g, and second post dip robot 116g may be performed while rotary milking platform 102 is substantially stationary or while the rotary milking platform 102 is rotating (as controlled by controller 110 in conjunction with rotary drive mechanism 108, as described in further detail below). For example, one or more of the robotic devices 116a-h may be operable to move along the perimeter of rotary milking platform 102 or along a tangent to rotary milking platform 102 as rotary milking platform 102 rotates (e.g. in response to a signal from controller 110), allowing the robotic arm to track the movement of a dairy cow 106 located in a milking stall 104 of rotary milking platform 102. In certain embodiments, the rotary milking platform 102 may rotate at a suitable speed in order to allow each robotic device 116 sufficient time to perform its functions on a dairy cow 106 in a first milking stall 104 (e.g. milking stall 104a) before moving on to a dairy cow 106 in a second milking stall 104 (e.g. milking stall 104h). For example, rotary milking platform 102 may rotate at a speed that provides a window of 12-20 seconds for a given robotic device 116 (e.g. preparation robot 116a) to perform its function while a particular stall is substantially adjacent to the location of that robotic device 116 (e.g. the preparation position).

As described in connection with FIGURE 1, in certain embodiments, various components of systems 1100a-c (e.g., rotary drive mechanism 108 and robotic devices 116a-h) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of systems 1100a-c, as described below. For example, in response to control logic 134, processor 128 may (1) communicate signals to actuators coupled to gates (e.g., exit gate 136) to initiate opening/closing of those gates, (2) communicate signals to rotary drive mechanism 108 to initiate the starting/stopping of rotary milking platform 102, and (3) communicate signals to robotic devices 116a-h to initiate performance of the above-described functions associated with those robotic devices 116a-h.

In some embodiments, each robotic device 116 (e.g. first preparation robotic 116a) may be operable to detect whether the milking platform 102 has rotated such that a particular milking stall 104 is substantially adjacent to its location (e.g. the first preparation position). Each robotic device 116 may then perform its associated function on a dairy cow 106 located in the particular milking stall 104. In other embodiments, controller 110 may be operable to determine whether the milking platform 102 has rotated such that a particular milking stall 104 is substantially adjacent to a particular robotic device 116. Controller 110 may then communicate signals to the particular robotic device 116, the signals causing the particular robotic device 116 to perform its associated function on a dairy cow 106 located in the particular milking stall 104.

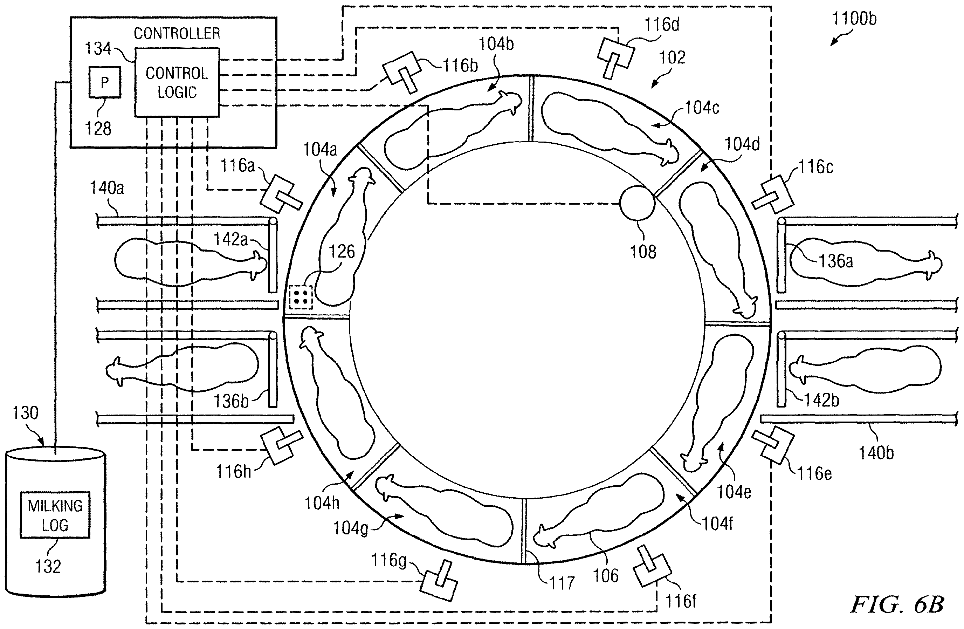

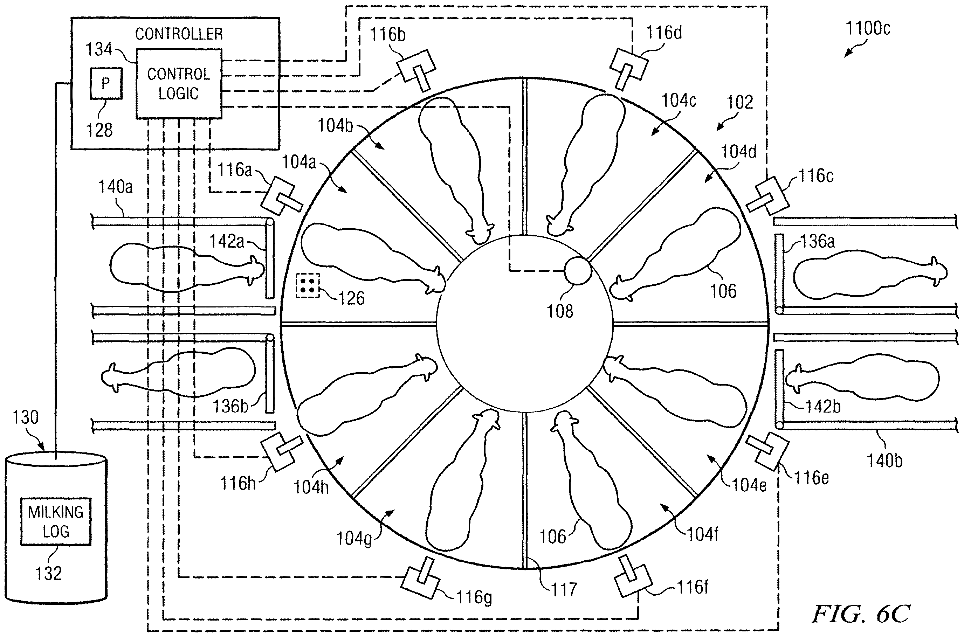

Numerous arrangements of milking stalls 104a-h on rotary milking platform 102 are possible. In the example of FIGURE 6A, milking stalls 104a-h are arranged in a herringbone pattern on rotary milking platform 102, such that milking stalls 104ah are oriented on a bias relative to the perimeter of milking platform 102. In this configuration, robotic devices 116a-h may extend and retract from between the legs of a dairy cow 106 located in a milking stall 104 from the side. In the example of FIGURE 6B, milking stalls 104a-h are arranged in a tandem configuration, such that the front of a dairy cow 106 in a first milking stall 104 is adjacent to the rear of a dairy cow 106 in an adjacent milking stall 104. In this configuration, robotic devices 116a-h may extend and retract from between the legs of a dairy cow 106 located in a milking stall 104 from the side. In the example of FIGURE 6C, milking stalls 104a-h are arranged in a side-by-side configuration, such that a dairy cow 106 in each milking stall 104 faces the middle of rotary milking platform 102. In this configuration, robotic devices 116a-h may extend and retract from between the legs of a dairy cow 106 located in a milking stall 104 from the rear between its hind legs. Although rotary milking platforms 102 having particular numbers of stalls 104a-h in particular configurations are illustrated, the present disclosure contemplates a rotary milking platform 102 having any suitable number of stalls 104a-h in any suitable configuration.

In operation of an example embodiment of systems 1100a-c, controller 110 may receive a signal indicating that a first dairy cow 106 has entered a first milking stall 104 (e.g. milking stall 104a) of rotary milking platform 102 using the first entrance lane 140a (e.g., from a presence sensor or from any other suitable component of systems 1100a-c). Once the first dairy cow 106 has fully entered the first milking stall 104a, controller 110 may communicate signals to actuators coupled to first entrance lane gate 142a and stall gate 117, the signals causing first entrance lane gate 142a and stall gate 117 to close. Meanwhile, controller 110 may receive a signal indicating that a second dairy cow 106 has entered a second milking stall 104 (e.g. milking stall 104e) of rotary milking platform 102 using the second entrance lane 140b (e.g., from a presence sensor or from any other suitable component of systems 1100a-c). Once the second dairy cow 106 has fully entered the second milking stall 104e, controller 110 may communicate signals to actuators coupled to second entrance lane gate 142b and stall gate 117, the signals causing second entrance lane gate 142b and stall gate 117 to close. Controller 110 may communicate a signal to rotary drive mechanism 108, the signal causing the rotary milking platform 102 to rotate such that the first milking stall 104a in which the first dairy cow 106 is located moves toward the first preparation position and the second milking stall 104e in which the second dairy cow 106 is located moves toward the second preparation position. In certain embodiments, rotary milking platform 102 may already be rotating as the first and second dairy cows 106 enter their respective milking stalls 104.

With the first milking stall 104a of the first dairy cow 106 moving through the first preparation position, first preparation robot 116a (e.g., in response to a signal received from controller 110) may extend between the legs of the first dairy cow 106 and prepare the teats of the first dairy cow 106 for the attachment of a milking apparatus 126 (e.g., by applying a sanitizing agent to the teats of the first dairy cow 106, cleaning the teats of the first dairy cow 106, and stimulating the teats of the first dairy cow 106), while the rotary milking platform 102 continues to rotate, such that the first milking stall 104a of the first dairy cow 106 moves toward the first attach position. Meanwhile, with the second milking stall 104e of the second dairy cow 106 moving through the second preparation position, second preparation robot 116e (e.g., in response to a signal received from controller 110) may extend between the legs of the second dairy cow 106 and prepare the teats of the second dairy cow 106 for the attachment of a milking apparatus 126 (e.g., by applying a sanitizing agent to the teats of the second dairy cow 106, cleaning the teats of the second dairy cow 106, and stimulating the teats of the second dairy cow 106), while the rotary milking platform 102 continues to rotate, such that the second milking stall 104e of the second dairy cow 106 moves toward the third attach position.

With the first milking stall 104a of the first dairy cow 106 moving through the first attach position, first attachment robot 116b (e.g., in response to a signal received from controller 110) may extend between the legs of the first dairy cow 106 and attach a milking apparatus 126 to one or more teats of the first dairy cow 106, while the rotary milking platform 102 continues to rotate, such that the first milking stall 104a of the first dairy cow 106 moves toward the second attach position. For example, first attachment robot 116b may access a milking apparatus 126 corresponding to the first milking stall 104a of the first dairy cow 106 from a known storage position within the first milking stall 104a (e.g., beneath the floor of the first milking stall 104a) and attach the accessed milking apparatus 126 to one or more teats of the first dairy cow 106. Meanwhile, with the second milking stall 104e of the second dairy cow 106 moving through the third attach position, third attachment robot 116f (e.g., in response to a signal received from controller 110) may extend between the legs of the second dairy cow 106 and attach a milking apparatus 126 to one or more teats of the second dairy cow 106, while the rotary milking platform 102 continues to rotate, such that the second milking stall 104e of the second dairy cow 106 moves toward the fourth attach position. For example, third attachment robot 116f may access a milking apparatus 126 corresponding to the second milking stall 104e of the second dairy cow 106 from a known storage position within the second milking stall 104e (e.g., beneath the floor of the second milking stall 104e) and attach the accessed milking apparatus 126 to one or more teats of the second dairy cow 106.

With the first milking stall 104a of the first dairy cow 106 moving through the second attach position, second attachment robot 116d (e.g., in response to a signal received from controller 110) may extend between the legs of the first dairy cow 106 and attach a milking apparatus 126 to one or more teats of the first dairy cow 106, while the rotary milking platform 102 continues to rotate, such that the first milking stall 104a of the first dairy cow 106 moves toward the first post dip position. For example, second attachment robot 116d may access a milking apparatus 126 corresponding to the first milking stall 104a of the first dairy cow 106 from a known storage position within the first milking stall 104a (e.g., beneath the floor of the first milking stall 104a) and attach the accessed milking apparatus 126 to one or more teats of the first dairy cow 106 which were not attached by the first attachment robot 116b. Meanwhile, with the second milking stall 104e of the second dairy cow 106 moving through the fourth attach position, fourth attachment robot 116g (e.g., in response to a signal received from controller 110) may extend between the legs of the second dairy cow 106 and attach a milking apparatus 126 to one or more teats of the second dairy cow 106, while the rotary milking platform 102 continues to rotate, such that the second milking stall 104e of the second dairy cow 106 moves toward the second post dip position. For example, fourth attachment robot 116g may access a milking apparatus 126 corresponding to the second milking stall 104e of the second dairy cow 106 from a known storage position within the second milking stall 104e (e.g., beneath the floor of the second milking stall 104e) and attach the accessed milking apparatus 126 to one or more teats of the second dairy cow 106 which were not attached by the third attachment robot 116f.

As rotary milking platform 102 continues to rotate, the first and second dairy cows 106 are milked, with the respective milking apparatuses 126 being detached and withdrawn (e.g., by retracting the milking apparatus 126 to the known storage position within the milking stall 104) once milking of each cow is complete.

With the first milking stall 104a of the first dairy cow 106 moving through the first post dip position, first post dip robot 116c (e.g., in response to a signal received from controller 110) may extend between the legs of the first dairy cow 106 and apply a sanitizing agent to the teats of the first dairy cow 106. Once first post dip robot 116c has applied the sanitizing agent, controller 110 may communicate a signal to an actuator coupled to first exit gate 136a, the signal initiating the opening of first exit gate 136a such that the first dairy cow 106 may exit the first milking stall 104a. If, however, controller 110 determines either that the first dairy cow 106 was not fully milked or that the milking apparatus 126 was detached prematurely (e.g., using historical milking data stored in milking log 132), a signal may not be communicated to the actuator coupled to first exit gate 136a, causing the first dairy cow 106 to complete another milking rotation (as described above). Meanwhile, with the second milking stall 104e of the second dairy cow 106 moving through the second post dip position, second post dip robot 116h (e.g., in response to a signal received from controller 110) may extend between the legs of the second dairy cow 106 and apply a sanitizing agent to the teats of the second dairy cow 106. Once second post dip robot 116h has applied the sanitizing agent, controller 110 may communicate a signal to an actuator coupled to second exit gate 136b, the signal initiating the opening of second exit gate 136b such that the second dairy cow 106 may exit the second milking stall 104e. If, however, controller 110 determines either that the second dairy cow 106 was not fully milked or that the milking apparatus 126 was detached prematurely (e.g., using historical milking data stored in milking log 132), a signal may not be communicated to the actuator coupled to second exit gate 136b, causing the second dairy cow 106 to complete another milking rotation (as described above).

Although a particular implementation of systems 1100a-c is illustrated and primarily described, the present disclosure contemplates any suitable implementation of systems 1100a-c, according to particular needs. Moreover, although robotic devices 116a-h of systems 1100a-c have been primarily described as being located at particular positions relative to milking platform 102, the present disclosure contemplates robotic devices 116a-h being positioned at any suitable locations, according to particular needs.

In the example of FIGURES 6A-6C, the robotic devices are located along the outer perimeter of the rotary milking platform. In certain other embodiments, the robotic devices may be located along the inner perimeter of the rotary milking platform. FIGURES 7A-7C illustrate top views of alternative example automated rotary milking parlor systems 1200a-c, according to certain embodiments of the present disclosure. Systems 1200a-c include a rotary milking platform 102 having any suitable number of milking stalls 104a-h, a rotary drive mechanism 108 coupled to the rotary milking platform 102, any suitable number of robotic devices 116a-h, entrance lanes 140a-b, entrance gates 142a-b, and exit gates 136a-b (like-numbered components being substantially similar to those discussed above with regard to FIGURE 1).

In certain embodiments, first entrance gate 142a may be located near second exit gate 136b and across rotary milking platform 102 from first exit gate 136a, such that a dairy cow 106 entering rotary milking platform 102 at first entrance gate 142a and exiting at first exit gate 136a may rotate through half of the circumference of rotary milking platform 102 during milking. Likewise, second entrance gate 142b may be located near first exit gate 136a across rotary milking platform 102 from second exit gate 136b, such that a dairy cow 106 entering rotary milking platform 102 at second entrance gate 142b and exiting at second exit gate 136b may rotate through half of the circumference of rotary milking platform 102 during milking. In certain embodiments, because a given cow may only rotate through half of the circumference of rotary milking platform 102 during milking, rotary milking platform 102 may rotate at a slower speed, as compared to some embodiments of a rotary milking platform with a single entry and exit, in order to allow sufficient time to complete the milking process.

Robotic devices 116a-h of systems 1200a-c may include a first preparation robot 116a, a first attachment robot 116b, a first post dip robot 116c, a second attachment robot 116d, a second preparation robot 116e, a third attachment robot 116f, a fourth attachment robot 116g, and a second post dip robot 116h.. First preparation robot 116a may be positioned proximate to the outer edge of rotary milking platform 102 such that first preparation robot 116a may extend and retract from between the legs of a dairy cow 106 in a milking stall 104 located at the first preparation position. First preparation robot 116a may be operable to prepare the teats of a dairy cow 106 in the milking stall 104 (e.g. milking stall 104a) located at the first preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the first preparation position may be located proximate to the first entrance lane gate 142a. For example, when a first stall 104 (e.g. milking stall 104a) is substantially adjacent to the first entrance lane gate 142a, the first stall 104 may also be substantially adjacent to the first preparation position, as illustrated in FIGURES 7A-7C. As another example, when a first stall 104 (e.g. milking stall 104a) is substantially adjacent to the first entrance lane gate 142a, an adjacent stall 104 (e.g. milking stall 104b) may be substantially adjacent to the first preparation position. As yet another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 is substantially adjacent to the first entrance lane gate 142a, the third stall 104 may be substantially adjacent to the first preparation position. In other words, the first entrance lane gate 142a may be separated from the first preparation position by one stall (i.e. the second stall 104b, in this example). In certain embodiments, the first entrance lane gate 142a may be separated from the first preparation position by fewer than three stalls.

First attachment robot 116b may be positioned proximate to the outer edge of rotary milking platform 102 such that first attachment robot 116b may extend and retract from between the legs of a dairy cow 106 in a milking stall 104 (e.g. milking stall 104b) located at the first attach position. First attachment robot 116b may be operable to perform functions including attaching a milking apparatus 126 to the teats of a dairy cow 106 in the milking stall 104 located at the first attach position.

In certain embodiments, the first attach position may be located proximate to the first preparation position. For example, when a first stall 104 (e.g. milking stall 104a) is substantially adjacent to the first preparation position, an adjacent stall 104 may be substantially adjacent to the first attach position (e.g. milking stall 104b), as illustrated in FIGURES 7A-7C. As another example, a first stall 104 (e.g. milking stall 104a) may be adjacent to a second stall 104 (e.g. milking stall 104b), which in turn is adjacent to a third stall 104 (e.g. milking stall 104c), such that when the first stall 104 is substantially adjacent to the first preparation position, the third stall 104 may be substantially adjacent to the first attach position. In other words, the first preparation position may be separated from the first attach position by one stall (i.e. the second stall 104b, in this example). In certain embodiments, the first preparation position may be separated from the first attach position by fewer than three stalls.

Second attachment robot 116d may be positioned proximate to the outer edge of rotary milking platform 102 such that second attachment robot 116d may extend and retract from between the legs of a dairy cow 106 in a milking stall 104 (e.g. milking stall 104c) located at the second attach position. Second attachment robot 116d may be operable to perform functions including attaching a milking apparatus 126 to the teats of a dairy cow 106 in the milking stall 104 located at the second attach position. The milking apparatus 126 may be stored beneath the floor of the milking stall 104 (or at any other suitable location) such that the milking apparatus is accessible by first attachment robot 116b and second attachment robot 116d.

In certain embodiments, the second attach position may be located proximate to the first attach position. In an example which is not part of the presently claimed invention, when a first stall 104 (e.g. milking stall 104b) is substantially adjacent to the first attach position, an adjacent stall 104 may be substantially adjacent to the second attach position (e.g. milking stall 104c), as illustrated in FIGURES 7A-7C. As a example which is part of the presently claimed invention, a first stall 104 (e.g. milking stall 104b) may be adjacent to a second stall 104 (e.g. milking stall 104c), which in turn is adjacent to a third stall 104 (e.g. milking stall 104d), such that when the first stall 104 is substantially adjacent to the first attach position, the third stall 104 may be substantially adjacent to the second attach position. In other words, the first attach position is separated from the second attach position by one stall (i.e. the second stall 104c, in this example). In certain embodiments, the first attach position may be separated from the second attach position by fewer than three stalls.

First post dip robot 116c may be positioned proximate to the outer edge of rotary milking platform 102 such that first post dip robot 116c may extend and retract from between the legs of a dairy cow 106 in a milking stall 104 (e.g. milking stall 104d) located at the first post dip position. First post dip robot 116c may be operable to perform functions including applying a sanitizing agent to the teats of a dairy cow 106 in the milking stall 104 located at the first post dip position.

In certain embodiments, the first post dip position may be located proximate to a first exit gate 136a. For example, when a first stall 104 (e.g. milking stall 104d) is substantially adjacent to the first exit gate 136a, the first stall 104 may also be substantially adjacent to the first post dip position, as illustrated in FIGURES 7A-7C. As another example, when a first stall 104 (e.g. milking stall 104d) is substantially adjacent to the first exit gate 136a, an adjacent stall 104 (e.g. milking stall 104c) may be substantially adjacent to the first post dip position. As yet another example, a first stall 104 (e.g. milking stall 104d) may be adjacent to a second stall 104 (e.g. milking stall 104c), which in turn is adjacent to a third stall 104 (e.g. milking stall 104b), such that when the first stall 104 is substantially adjacent to the first exit gate 136a, the third stall 104 may be substantially adjacent to the first post dip position. In other words, the first exit gate 136a may be separated from the first post dip position by one stall (i.e. the second stall 104c, in this example). In certain embodiments, the first exit gate 136a may be separated from the first post dip position by fewer than three stalls.

Second preparation robot 116e may be positioned proximate to the outer edge of rotary milking platform 102 such that second preparation robot 116e may extend and retract from between the legs of a dairy cow 106 in a milking stall 104 (e.g. milking stall 104e) located at the second preparation position. Second preparation robot 116e may be operable to prepare the teats of a dairy cow 106 in the milking stall 104 located at the second preparation position for the attachment of a milking apparatus 126 (e.g., by applying a first sanitizing agent to the teats of the dairy cow 106, cleaning the teats of the dairy cow 106, and stimulating the teats of the dairy cow 106).

In certain embodiments, the second preparation position may be located proximate to the second entrance lane gate 142b. For example, when a first stall 104 (e.g. milking stall 104e) is substantially adjacent to the second entrance lane gate 142b, the first stall 104 may also be substantially adjacent to the second preparation position, as illustrated in FIGURES 7A-7C. As another example, when a first stall 104 (e.g. milking stall 104e) is substantially adjacent to the second entrance lane gate 142b, an adjacent stall 104 (e.g. milking stall 104f) may be substantially adjacent to the second preparation position. As yet another example, a first stall 104 (e.g. milking stall 104e) may be adjacent to a second stall 104 (e.g. milking stall 104f), which in turn is adjacent to a third stall 104 (e.g. milking stall 104g), such that when the first stall 104 is substantially adjacent to the second entrance lane gate 142b, the third stall 104 may be substantially adjacent to the second preparation position. In other words, the second entrance lane gate 142b may be separated from the second preparation position by one stall (i.e. the second stall 104f, in this example). In certain embodiments, the second entrance lane gate 142b may be separated from the second preparation position by fewer than three stalls.

Third attachment robot 116f may be positioned proximate to the outer edge of rotary milking platform 102 such that third attachment robot 116f may extend and retract from between the legs of a dairy cow 106 in a milking stall 104 (e.g. milking stall 104f) located at the third attach position. Third attachment robot 116f may be operable to perform functions including attaching a milking apparatus 126 to the teats of a dairy cow 106 in the milking stall 104 located at the third attach position.

In certain embodiments, the third attach position may be located proximate to the second preparation position. For example, when a first stall 104 (e.g. milking stall 104e) is substantially adjacent to the second preparation position, an adjacent stall 104 (e.g. milking stall 104f) may be substantially adjacent to the third attach position, as illustrated in FIGURES 7A-7C. As another example, a first stall 104 (e.g. milking stall 104e) may be adjacent to a second stall 104 (e.g. milking stall 104f), which in turn is adjacent to a third stall 104 (e.g. milking stall 104g), such that when the first stall 104 is substantially adjacent to the second preparation position, the third stall 104 may be substantially adjacent to the third attach position. In other words, the second preparation position may be separated from the third attach position by one stall (i.e. the second stall 104f, in this example). In certain embodiments, the second preparation position may be separated from the third attach position by fewer than three stalls.

Fourth attachment robot 116g may be positioned proximate to the outer edge of rotary milking platform 102 such that fourth attachment robot 116g may extend and retract from between the legs of a dairy cow 106 in a milking stall 104 (e.g. milking stall 104g) located at a seventh rotational position of rotary milking platform 102 (the "fourth attach position"). Fourth attachment robot 116g may be operable to perform functions including attaching a milking apparatus 126 to the teats of a dairy cow 106 in the milking stall 104 located at the fourth attach position. The milking apparatus 126 may be stored beneath the floor of the milking stall 104 (or at any other suitable location) such that the milking apparatus is accessible by third attachment robot 116f and fourth attachment robot 116g.

In certain embodiments, the fourth attach position may be located proximate to the third attach position. For example, when a first stall 104 (e.g. milking stall 104f) is substantially adjacent to the third attach position, an adjacent stall 104 (e.g. milking stall 104g) may be substantially adjacent to the fourth attach position, as illustrated in FIGURES 7A-7C. As another example, a first stall 104 (e.g. milking stall 104f) may be adjacent to a second stall 104 (e.g. milking stall 104g), which in turn is adjacent to a third stall 104 (e.g. milking stall 104h), such that when the first stall 104 is substantially adjacent to the third attach position, the third stall 104 may be substantially adjacent to the fourth attach position. In other words, the third attach position may be separated from the fourth attach position by one stall (i.e. the second stall 104g, in this example). In certain embodiments, the third attach position may be separated from the fourth attach position by fewer than three stalls.

Second post dip robot 116h may be positioned proximate to the outer edge of rotary milking platform 102 such that second post dip robot 116h may extend and retract from between the legs of a dairy cow 106 in a milking stall 104 (e.g. milking stall 104h) located at the second post dip position. Second post dip robot 116h may be operable to perform functions including applying a sanitizing agent to the teats of a dairy cow 106 in the milking stall 104 located at the second post dip position.

In certain embodiments, the second post dip position may be located proximate to a second exit gate 136b. For example, when a first stall 104 (e.g. milking stall 104h) is substantially adjacent to the second exit gate 136b, the first stall 104 may also be substantially adjacent to the second post dip position, as illustrated in FIGURES 7A-7C. As another example, when a first stall 104 (e.g. milking stall 104h) is substantially adjacent to the second exit gate 136b, an adjacent stall 104 (e.g. milking stall 104g) may be substantially adjacent to the second post dip position. As yet another example, a first stall 104 (e.g. milking stall 104h) may be adjacent to a second stall 104 (e.g. milking stall 104g), which in turn is adjacent to a third stall 104 (e.g. milking stall 104f), such that when the first stall 104 is substantially adjacent to the second exit gate 136b, the third stall 104 may be substantially adjacent to the second post dip position. In other words, the second exit gate 136b may be separated from the second post dip position by one stall (i.e. the second stall 104g, in this example). In certain embodiments, the second exit gate 136b may be separated from the second post dip position by fewer than three stalls.

Each of the above-described functions performed by first preparation robot 116a, first attachment robot 116b, first post dip robot 116c, second attachment robot 116d, second preparation robot 116e, third attachment robot 116f, fourth attachment robot 116g, and second post dip robot 116g may be performed while rotary milking platform 102 is substantially stationary or while the rotary milking platform 102 is rotating (as controlled by controller 110 in conjunction with rotary drive mechanism 108, as described in further detail below). For example, one or more of the robotic devices 116a-h may be operable to move along the perimeter of rotary milking platform 102 or along a tangent to rotary milking platform 102 as rotary milking platform 102 rotates (e.g. in response to a signal from controller 110), allowing the robotic arm to track the movement of a dairy cow 106 located in a milking stall 104 of rotary milking platform 102. In certain embodiments, the rotary milking platform 102 may rotate at a suitable speed in order to allow each robotic device 116 sufficient time to perform its functions on a dairy cow 106 in a first milking stall 104 (e.g. milking stall 104a) before moving on to a dairy cow 106 in a second milking stall 104 (e.g. milking stall 104h).

As described in connection with FIGURE 1, in certain embodiments, various components of systems 1200a-c (e.g., rotary drive mechanism 108 and robotic devices 116a-h) may each be communicatively coupled (e.g., via a network facilitating wireless or wireline communication) to controller 110, which may initiate/control the automated operation of those devices (as described in further detail below). In certain embodiments, controller 110 may include control logic 134 (e.g., stored memory module 130), which may include any information, logic, and/or instructions stored and/or executed by controller 110 to control the automated operation of systems 1200a-c, as described below. For example, in response to control logic 134, processor 128 may (1) communicate signals to actuators coupled to gates (e.g., exit gates 136) to initiate opening/closing of those gates, (2) communicate signals to rotary drive mechanism 108 to initiate the starting/stopping of rotary milking platform 102, and (3) communicate signals to robotic devices 116a-h to initiate performance of the above-described functions associated with those robotic devices 116a-h.

In some embodiments, each robotic device 116 (e.g. first preparation robotic 116a) may be operable to detect whether the milking platform 102 has rotated such that a particular milking stall 104 is substantially adjacent to its location (e.g. the first preparation position). Each robotic device 116 may then perform its associated function on a dairy cow 106 located in the particular milking stall 104. In other embodiments, controller 110 may be operable to determine whether the milking platform 102 has rotated such that a particular milking stall 104 is substantially adjacent to a particular robotic device 116. Controller 110 may then communicate signals to the particular robotic device 116, the signals causing the particular robotic device 116 to perform its associated function on a dairy cow 106 located in the particular milking stall 104.

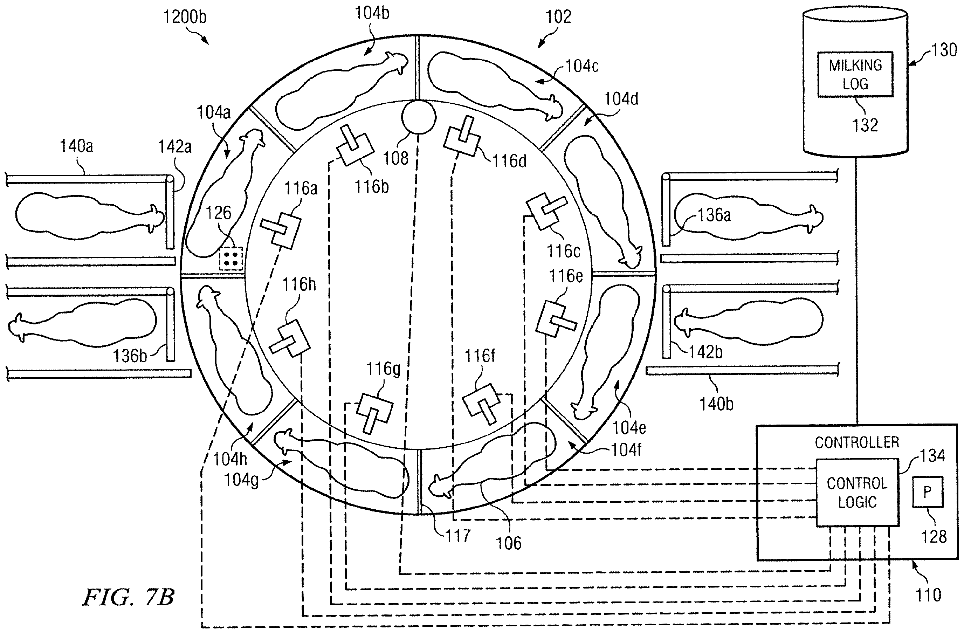

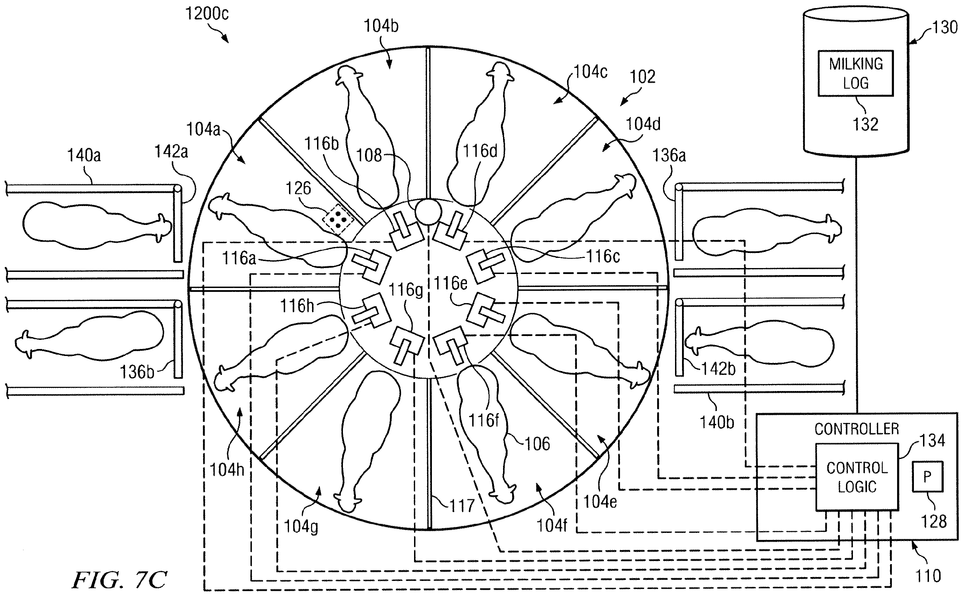

Numerous arrangements of milking stalls 104a-h on rotary milking platform 102 are possible. In the example of FIGURE 7A, milking stalls 104a-h are arranged in a herringbone pattern on rotary milking platform 102, such that milking stalls 104ah are oriented on a bias relative to the perimeter of milking platform 102. In this configuration, robotic devices 116a-h may extend and retract from between the legs of a dairy cow 106 located in a milking stall 104 from the side. In the example of FIGURE 7B, milking stalls 104a-h are arranged in a tandem configuration, such that the front of a dairy cow 106 in a first milking stall 104 is adjacent to the rear of a dairy cow 106 in an adjacent milking stall 104. In this configuration, robotic devices 116a-h may extend and retract from between the legs of a dairy cow 106 located in a milking stall 104 from the side. In the example of FIGURE 7C, milking stalls 104a-h are arranged in a side-by-side configuration, such that a dairy cow 106 in each milking stall 104 faces away from the middle of rotary milking platform 102. In this configuration, robotic devices 116a-h may extend and retract from between the legs of a dairy cow 106 located in a milking stall 104 from the rear between its hind legs. Although rotary milking platforms 102 having particular numbers of stalls 104a-h in particular configurations are illustrated, the present disclosure contemplates a rotary milking platform 102 having any suitable number of stalls 104a-h in any suitable configuration.

In operation of an example embodiment of systems 1200a-c, controller 110 may receive a signal indicating that a first dairy cow 106 has entered a first milking stall 104 (e.g. milking stall 104a) of rotary milking platform 102 using the first entrance lane 140a (e.g., from a presence sensor or from any other suitable component of systems 1200a-c). Once the first dairy cow 106 has fully entered the first milking stall 104a, controller 110 may communicate signals to actuators coupled to first entrance lane gate 142a and stall gate 117, the signals causing first entrance lane gate 142a and stall gate 117 to close. Meanwhile, controller 110 may receive a signal indicating that a second dairy cow 106 has entered a second milking stall 104 (e.g. milking stall 104e) of rotary milking platform 102 using the second entrance lane 140b (e.g., from a presence sensor or from any other suitable component of systems 1200a-c). Once the second dairy cow 106 has fully entered the second milking stall 104e, controller 110 may communicate signals to actuators coupled to second entrance lane gate 142b and stall gate 117, the signals causing second entrance lane gate 142b and stall gate 117 to close. Controller 110 may communicate a signal to rotary drive mechanism 108, the signal causing the rotary milking platform 102 to rotate such that the first milking stall 104a in which the first dairy cow 106 is located moves toward the first preparation position and the second milking stall 104e in which the second dairy cow 106 is located moves toward the second preparation position. In certain embodiments, rotary milking platform 102 may already be rotating as the first and second dairy cows 106 enter their respective milking stalls 104.

With the first milking stall 104a of the first dairy cow 106 moving through the first preparation position, first preparation robot 116a (e.g., in response to a signal received from controller 110) may extend between the legs of the first dairy cow 106 and prepare the teats of the first dairy cow 106 for the attachment of a milking apparatus 126 (e.g., by applying a sanitizing agent to the teats of the first dairy cow 106, cleaning the teats of the first dairy cow 106, and stimulating the teats of the first dairy cow 106), while the rotary milking platform 102 continues to rotate, such that the first milking stall 104a of the first dairy cow 106 moves toward the first attach position. Meanwhile, with the second milking stall 104e of the second dairy cow 106 moving through the second preparation position, second preparation robot 116e (e.g., in response to a signal received from controller 110) may extend between the legs of the second dairy cow 106 and prepare the teats of the second dairy cow 106 for the attachment of a milking apparatus 126 (e.g., by applying a sanitizing agent to the teats of the second dairy cow 106, cleaning the teats of the second dairy cow 106, and stimulating the teats of the second dairy cow 106), while the rotary milking platform 102 continues to rotate, such that the second milking stall 104e of the second dairy cow 106 moves toward the third attach position.

With the first milking stall 104a of the first dairy cow 106 moving through the first attach position, first attachment robot 116b (e.g., in response to a signal received from controller 110) may extend between the legs of the first dairy cow 106 and attach a milking apparatus 126 to one or more teats of the first dairy cow 106, while the rotary milking platform 102 continues to rotate, such that the first milking stall 104a of the first dairy cow 106 moves toward the second attach position. For example, first attachment robot 116b may access a milking apparatus 126 corresponding to the first milking stall 104a of the first dairy cow 106 from a known storage position within the first milking stall 104a (e.g., beneath the floor of the first milking stall 104a) and attach the accessed milking apparatus 126 to one or more teats of the first dairy cow 106. Meanwhile, with the second milking stall 104e of the second dairy cow 106 moving through the third attach position, third attachment robot 116f (e.g., in response to a signal received from controller 110) may extend between the legs of the second dairy cow 106 and attach a milking apparatus 126 to one or more teats of the second dairy cow 106, while the rotary milking platform 102 continues to rotate, such that the second milking stall 104e of the second dairy cow 106 moves toward the fourth attach position. For example, third attachment robot 116f may access a milking apparatus 126 corresponding to the second milking stall 104e of the second dairy cow 106 from a known storage position within the second milking stall 104e (e.g., beneath the floor of the second milking stall 104e) and attach the accessed milking apparatus 126 to one or more teats of the second dairy cow 106.

With the first milking stall 104a of the first dairy cow 106 moving through the second attach position, second attachment robot 116d (e.g., in response to a signal received from controller 110) may extend between the legs of the first dairy cow 106 and attach a milking apparatus 126 to one or more teats of the first dairy cow 106, while the rotary milking platform 102 continues to rotate, such that the first milking stall 104a of the first dairy cow 106 moves toward the first post dip position. For example, second attachment robot 116d may access a milking apparatus 126 corresponding to the first milking stall 104a of the first dairy cow 106 from a known storage position within the first milking stall 104a (e.g., beneath the floor of the first milking stall 104a) and attach the accessed milking apparatus 126 to one or more teats of the first dairy cow 106 which were not attached by the first attachment robot 116b. Meanwhile, with the second milking stall 104e of the second dairy cow 106 moving through the fourth attach position, fourth attachment robot 116g (e.g., in response to a signal received from controller 110) may extend between the legs of the second dairy cow 106 and attach a milking apparatus 126 to one or more teats of the second dairy cow 106, while the rotary milking platform 102 continues to rotate, such that the second milking stall 104e of the second dairy cow 106 moves toward the second post dip position. For example, fourth attachment robot 116g may access a milking apparatus 126 corresponding to the second milking stall 104e of the second dairy cow 106 from a known storage position within the second milking stall 104e (e.g., beneath the floor of the second milking stall 104e) and attach the accessed milking apparatus 126 to one or more teats of the second dairy cow 106 which were not attached by the third attachment robot 116f.

As rotary milking platform 102 continues to rotate, the first and second dairy cows 106 are milked, with the respective milking apparatuses 126 being detached and withdrawn (e.g., by retracting the milking apparatus 126 to the known storage position within the milking stall 104) once milking of each cow is complete.

With the first milking stall 104a of the first dairy cow 106 moving through the first post dip position, first post dip robot 116c (e.g., in response to a signal received from controller 110) may extend between the legs of the first dairy cow 106 and apply a sanitizing agent to the teats of the first dairy cow 106. Once first post dip robot 116c has applied the sanitizing agent, controller 110 may communicate a signal to an actuator coupled to first exit gate 136a, the signal initiating the opening of first exit gate 136a such that the first dairy cow 106 may exit the first milking stall 104a. If, however, controller 110 determines either that the first dairy cow 106 was not fully milked or that the milking apparatus 126 was detached prematurely (e.g., using historical milking data stored in milking log 132), a signal may not be communicated to the actuator coupled to first exit gate 136a, causing the first dairy cow 106 to complete another milking rotation (as described above). Meanwhile, with the second milking stall 104e of the second dairy cow 106 moving through the second post dip position, second post dip robot 116h (e.g., in response to a signal received from controller 110) may extend between the legs of the second dairy cow 106 and apply a sanitizing agent to the teats of the second dairy cow 106. Once second post dip robot 116h has applied the sanitizing agent, controller 110 may communicate a signal to an actuator coupled to second exit gate 136b, the signal initiating the opening of second exit gate 136b such that the second dairy cow 106 may exit the second milking stall 104e. If, however, controller 110 determines either that the second dairy cow 106 was not fully milked or that the milking apparatus 126 was detached prematurely (e.g., using historical milking data stored in milking log 132), a signal may not be communicated to the actuator coupled to second exit gate 136b, causing the second dairy cow 106 to complete another milking rotation (as described above).

Although a particular implementation of systems 1200a-c is illustrated and primarily described, the present disclosure contemplates any suitable implementation of systems 1200a-c, according to particular needs. Moreover, although robotic devices 116a-h of systems 1200a-c have been primarily described as being located at particular positions relative to milking platform 102, the present disclosure contemplates robotic devices 116a-h being positioned at any suitable locations, according to particular needs.

Although the present invention has been described with several embodiments, diverse changes, substitutions, variations, alterations, and modifications may be suggested to one skilled in the art, and it is intended that the invention encompass all such changes, substitutions, variations, alterations, and modifications as fall within the scope of the appended claims.

## Claims

1. A system (900a-c; 1000a-c, 1100a-c, 1200a-c), comprising:
a rotary milking platform (102) having a plurality of milking stalls (104);
a first robotic device (116a) positioned at a first location proximate to the rotary milking platform (102), the first robotic device (116a) operable to prepare the teats of a first dairy livestock (106) located in a first milking stall (104b) of the rotary milking platform (102) while the first milking stall (104b) is substantially adjacent to the first location;
a second robotic device (116b) positioned at a second location proximate to the rotary milking platform (102), the second robotic device (116b) operable to attach a first milking device to the teats of the first dairy livestock (106) located in the first milking stall (104b) while the first milking stall (104b) is substantially adjacent to the second location;
a third robotic device (116d) positioned at a third location proximate to the rotary milking platform (102), the third robotic device (116d) operable to attach a second milking device to the teats of a second dairy livestock (106) located in a second milking stall (104d) while the second milking stall (104d) is substantially adjacent to the third location, wherein at least one milking stall (104c) separates the second milking stall (104d) and the first milking stall (104a) to space apart the third robotic device (116d) and the second robotic device (116b); and
a fourth robotic device (116c) positioned at a fourth location proximate to the rotary milking platform (102), the fourth robotic device (116c) operable to apply a sanitizing agent to the teats of the first dairy livestock (106) located in the first milking stall (104b), subsequent to a removal of the first milking device from the teats of the first dairy livestock (106), while the first milking stall (104b) is substantially adjacent to the fourth location.

2. The system (900a, 1000a, 1100a, 1200a) of Claim 1, wherein:
the plurality of milking stalls (104) are arranged in a herringbone configuration on the rotary milking platform (102); and the first robotic device (116a), the second robotic device (116b), and the fourth robotic device (116d) are operable to extend and retract from between a front leg and a hind leg of the first dairy livestock (106) located in the first milking stall (104b).

3. The system (900c, 1000c, 1100c, 1200c) of Claim 1, wherein:
the plurality of milking stalls (104) are arranged in a side-by-side configuration on the rotary milking platform (102); and
the first robotic device (116a), the second robotic device (116b), and the fourth robotic device (116d) are operable to extend and retract from between the hind legs of the first dairy livestock (106) located in the first milking stall (104b).

4. The system (900b, 1000b, 1100b, 1200b) of Claim 1, wherein:
the plurality of milking stalls (104) are arranged in a tandem configuration on the rotary milking platform (102); and
the first robotic device (116a), the second robotic device (116b), and the fourth robotic device (116d) are operable to extend and retract from between a front leg and a hind leg of the first dairy livestock (106) located in the first milking stall (104b).

5. The system (900a-c; 1000a-c, 1100a-c, 1200a-c) of Claim 1, wherein:
the first location is separated from a first entry (142) of the rotary milking platform (102) by fewer than three adjacent milking stalls (104);
the second location is separated from the first location by fewer than three adjacent milking stalls (104);
the third location is separated from the second location by fewer than three adjacent milking stalls (104); and
the fourth location is separated from a first exit (136) of the rotary milking platform (102) by fewer than three adjacent milking stalls (104).

6. The system (900, 1100) of Claim 1, wherein the first location, the second location, the third location, and the fourth location are located along an outer edge of the rotary milking platform (102).

7. The system (1000, 1200) of Claim 1, wherein the first location, the second location, the third location, and the fourth location are located along an inner edge of the rotary milking platform (102).

8. The system (1100, 1200) of Claim 1, further comprising:
a fifth robotic device (116e) positioned at a fifth location proximate to the rotary milking platform (102), the fifth robotic device (116e) operable to prepare the teats of a third dairy livestock located in a third milking stall (104e) while the third milking stall is substantially adjacent to the fifth location;
a sixth robotic device (116f) positioned at a sixth location proximate to the rotary milking platform (102), the sixth robotic device (116f) operable to attach a third milking device to the teats of the third dairy livestock (106) located in the third milking stall (104e) while the third milking stall (104e) is substantially adjacent to the sixth location;
a seventh robotic device (116g) positioned at a seventh location proximate to the rotary milking platform (102), the seventh robotic device (116g) operable to attach a fourth milking device to the teats of a fourth dairy livestock (106) located in a fourth milking stall (104g) while the fourth milking stall (104g) is substantially adjacent to the seventh location; and
an eighth robotic device (116h) positioned at an eighth location proximate to the rotary milking platform (102), the eighth robotic device (116h) operable to apply a sanitizing agent to the teats of the third dairy livestock (106) located in the third milking stall (104e), subsequent to a removal of the third milking device from the teats of the third dairy livestock (106), while the third milking stall (104e) is substantially adjacent to the eighth location.

9. The system (1100, 1200) of Claim 8, wherein:
the first location is separated from a first entry (142a) of the rotary milking platform (102) by fewer than three adjacent milking stalls (104);
the second location is separated from the first location by fewer than three adjacent milking stalls (104);
the third location is separated from the second location by fewer than three adjacent milking stalls (104);
the fourth location is separated from a first exit (136a) of the rotary milking platform by fewer than three adjacent milking stalls (104);
the fifth location is separated from a second entry (142b) of the rotary milking platform by fewer than three adjacent milking stalls (104);
the sixth location is separated from the fifth location by fewer than three adjacent milking stalls (104);
the seventh location is separated from the sixth location by fewer than three adjacent milking stalls (104); and
the eighth location is separated from a second exit (135b) of the rotary milking platform by fewer than three adjacent milking stalls (104).

10. The system (1100) of Claim 8, wherein the first location, the second location, the third location, the fourth location, the fifth location, the sixth location, the seventh location, and the eighth location are located along an outer edge of the rotary milking platform (102).

11. The system (1200) of Claim 8, wherein the first location, the second location, the third location, the fourth location, the fifth location, the sixth location, the seventh location, and the eighth location are located along an inner edge of the rotary milking platform (102).

12. The system (900a-c; 1000a-c, 1100a-c, 1200a-c) of Claim 1, wherein:
the first robotic device (116a) is operable to prepare the teats of the first dairy livestock while the rotary milking platform (102) is moving;
the second robotic device (116b) is operable to attach the first milking device to the teats of the first dairy livestock while the rotary milking platform (102) is moving;
the third robotic device (116d) is operable to attach the second milking device to the teats of the second dairy livestock while the rotary milking platform (102) is moving; and
the fourth robotic device (116c) is operable to apply the sanitizing agent to the teats of the first dairy livestock while the rotary milking platform (102) is moving.

13. The system (900a-c; 1000a-c, 1100a-c, 1200a-c) of Claim 1, wherein one or more of the first robotic device (116a), the second robotic device (116b), and the fourth robotic device (116d) are operable to extend and retract from between the legs of the first dairy livestock while the rotary milking platform (102) is moving.

14. A method, comprising:
receiving a first dairy livestock (102) into a first milking stall (104b) of a rotary milking platform (102) having a plurality of milking stalls, wherein a second milking stall (104d) of the rotary milking platform (102) contains a second dairy livestock (106) and at least one milking stall (104c) separates the second milking stall (104d) and the first milking stall (104b);
rotating the rotary milking platform (102), such that the first milking stall (104b) is substantially adjacent to a first robotic device (116a) positioned at a first location proximate to the rotary milking platform (102), the first robotic device (102) operable to prepare the teats of the first dairy livestock (106) located in the first milking stall (104b) while the first milking stall (104b) is substantially adjacent to the first location;
preparing, using the first robotic device (116a), the teats of the first dairy livestock (106) located in the first milking stall (104b);
rotating the rotary milking platform (102), such that the first milking stall (104b) is substantially adjacent to a second robotic device (116b) positioned at a second location proximate to the rotary milking platform (102), the second robotic device (116b) operable to attach a first milking device to the teats of the first dairy livestock (106) located in the first milking stall (104b) while the milking stall is substantially adjacent to the second location;
attaching, using the second robotic device (116b), the first milking device to the teats of the first dairy livestock (106) located in the first milking stall (104b), wherein the second milking stall (104d) is substantially adjacent to a third robotic device (116d) positioned at a third location proximate to the rotary milking platform (102), the third robotic device (116d) operable to attach a second milking device to the teats of the second dairy livestock (106);
milking the first dairy livestock (106) located in the first milking stall (104b) using the attached first milking device;
milking the second dairy livestock (106) located in the second milking stall (104d) using the attached second milking device;
rotating the rotary milking platform (102), such that the first milking stall (104b) is substantially adjacent to a fourth robotic device (116c) positioned at a fourth location proximate to the rotary milking platform (102), the fourth robotic device (116c) operable to apply a sanitizing agent to the teats of the first dairy livestock (106) located in the milking stall, subsequent to a removal of the first milking device from the teats of the first dairy livestock (106), while the first milking stall (104b)is substantially adjacent to the fourth location; and
applying, using the fourth robotic device (116c), a sanitizing agent to the teats of the first dairy livestock located in the first milking stall (104b).

15. The method of Claim 14, wherein:
preparing the teats of the first dairy livestock (106) is performed while the rotary milking platform (102) is moving;
attaching the first milking device to the teats of the first dairy livestock (106) is performed while the rotary milking platform (102) is moving; and
applying the sanitizing agent to the teats of the first dairy livestock (106) is performed while the rotary milking platform (102) is moving.

## Patentansprüche

1. Ein System (900a-c; 1000a-c; 1100a-c, 1200a-c), umfassend:
ein Melkkarussell (102) mit mehreren Melkbuchten (104);
ein erstes robotisches Gerät (116a), das in einer ersten Position räumlich nahe zu dem Melkkarussell (102) positioniert ist, wobei das erste robotische Gerät (116a) dahingehend betriebsfähig ist, dass es die Zitzen eines ersten Milchtiers (106) vorbereitet, das sich in einer ersten Melkbucht (104b) des Melkkarussells (102) befindet, während sich die erste Melkbucht (104b) im Wesentlichen neben der ersten Position befindet;
ein zweites robotisches Gerät (116b), das in einer zweiten Position räumlich nahe zu dem Melkkarussell (102) positioniert ist, wobei das zweite robotische Gerät (116b) dahingehend betriebsfähig ist, dass es ein erstes Melkgerät an die Zitzen des ersten Milchtiers (106) anschließt, das sich in der ersten Melkbucht (104b) befindet, während sich die erste Melkbucht (104b) im Wesentlichen neben der zweiten Position befindet;
ein drittes robotisches Gerät (116d), das in einer dritten Position räumlich nahe zu dem Melkkarussell (102) positioniert ist, wobei das dritte robotische Gerät (116d) dahingehend betriebsfähig ist, dass es ein zweites Melkgerät an die Zitzen eines zweiten Milchtiers (106) anschließt, das sich in einer zweiten Melkbucht (104d) befindet, während sich die zweite Melkbucht (104d) im Wesentlichen neben der dritten Position befindet, und wobei mindestens eine Melkbucht (104c) die zweite Melkbucht (104d) und die erste Melkbucht (104a) voneinander trennt, so dass ein Abstand zwischen dem dritten robotischen Gerät (116d) und dem zweiten robotischen Gerät (116b) besteht; und
ein viertes robotisches Gerät (116c), das in einer vierten Position räumlich nahe zu dem Melkkarussell (102) positioniert ist, wobei das vierte robotische Gerät (116c) dahingehend betriebsfähig ist, dass es ein Desinfektionsmittel auf die Zitzen des ersten Milchtiers (106) aufträgt, das sich in der ersten Melkbucht (104b) befindet, nachdem das erste Melkgerät von den Zitzen des erstens Milchtiers (106) entfernt wurde, während sich die erste Melkbucht (104b) im Wesentlichen neben der vierten Position befindet.

2. Das System (900a, 1000a, 1100a, 1200a) nach Anspruch 1, wobei:
die mehreren Melkbuchten (104) in einer Fischgrätkonfiguration auf dem Melkkarussell (102) angeordnet sind; und das erste robotische Gerät (116a), das zweite robotische Gerät (116b) und das vierte robotische Gerät (116d) dahingehend betriebsfähig sind, dass sie zwischen einem Vorderbein und einem Hinterbein des ersten Milchtiers (106), das sich in der ersten Melkbucht (104b) befindet, vor- und zurückfahren.

3. Das System (900c, 1000c, 1100c, 1200c) nach Anspruch 1, wobei:
die mehreren Melkbuchten (104) nebeneinander auf dem Melkkarussell (102) angeordnet sind; und
das erste robotische Gerät (116a), das zweite robotische Gerät (116b) und das vierte robotische Gerät (116d) dahingehend betriebsfähig sind, dass sie zwischen den Hinterbeinen des ersten Milchtiers (106), das sich in der ersten Melkbucht (104b) befindet, vor- und zurückfahren.

4. Das System (9900b, 1000b, 1100b, 1200b) nach Anspruch 1, wobei:
die mehreren Melkbuchten (104) in einer Tandemkonfiguration auf dem Melkkarussell (102) angeordnet sind; und
das erste robotische Gerät (116a), das zweite robotische Gerät (116b) und das vierte robotische Gerät (116d) dahingehend betriebsfähig sind, dass sie zwischen einem Vorderbein und einem Hinterbein des ersten Milchtiers (106), das sich in der ersten Melkbucht (104b) befindet, vor- und zurückfahren.

5. Das System (900a-c; 1000a-c, 1100a-c, 1200a-c) nach Anspruch 1, wobei:
die erste Position von einem ersten Eingang (142) des Melkkarussells (102) durch weniger als drei benachbarte Melkbuchten (104) getrennt ist;
die zweite Position von der ersten Position durch weniger als drei benachbarte Melkbuchten (104) getrennt ist;
die dritte Position von der zweiten Position durch weniger als drei benachbarte Melkbuchten (104) getrennt ist; und
die vierte Position von einem ersten Ausgang (136) des Melkkarussells (102) durch weniger als drei benachbarte Melkbuchten (104) getrennt ist.

6. Das System (900, 1100) nach Anspruch 1, wobei die erste Position, die zweite Position, die dritte Position und die vierte Position entlang einer Außenkante des Melkkarussells (102) positioniert sind.

7. Das System (1000, 1200) nach Anspruch 1, wobei die erste Position, die zweite Position, die dritte Position und die vierte Position entlang einer Innenkante des Melkkarussells (102) positioniert sind.

8. Das System (1100, 1200) nach Anspruch 1, weiter umfassend:
ein fünftes robotisches Gerät (116d), das in einer fünften Position räumlich nahe zu dem Melkkarussell (102) positioniert ist, wobei das fünfte robotische Gerät (116e) dahingehend betriebsfähig ist, dass es die Zitzen eines dritten Milchtiers vorbereitet, das sich in einer dritten Melkbucht (104e) befindet, während sich die dritte Melkbucht im Wesentlichen neben der fünften Position befindet;
ein sechstes robotisches Gerät (116f), das in einer sechsten Position räumlich nahe zu dem Melkkarussell (102) positioniert ist, wobei das sechste robotische Gerät (116f) dahingehend betriebsfähig ist, dass es ein drittes Melkgerät an die Zitzen des dritten Milchtiers (106) anschließt, das sich in der dritten Melkbucht (104e) befindet, während sich die dritte Melkbucht (104e) im Wesentlichen neben der sechsten Position befindet;
ein siebtes robotisches Gerät (116g), das in einer siebten Position räumlich nahe zu dem Melkkarussell (102) positioniert ist, wobei das siebte robotische Gerät (116g) dahingehend betriebsfähig ist, dass es ein viertes Melkgerät an die Zitzen eines vierten Milchtiers (106) anschließt, das sich in einer vierten Melkbucht (104g) befindet, während sich die vierte Melkbucht (104g) im Wesentlichen neben der siebten Position befindet; und
ein achtes robotisches Gerät (116h), das in einer achten Position räumlich nahe zu dem Melkkarussell (102) positioniert ist, wobei das achte robotische Gerät (116h) dahingehend betriebsfähig ist, dass es ein Desinfektionsmittel auf die Zitzen des dritten Milchtiers (106) aufträgt, das sich in der dritten Melkbucht (104e) befindet, nachdem das dritte Melkgerät von den Zitzen des dritten Milchtiers (106) entfernt wurde, während sich die dritte Melkbucht (104c) im Wesentlichen neben der achten Position befindet.

9. Das System (1100, 1200) nach Anspruch 8, wobei:
die erste Position von einem ersten Eingang (142a) des Melkkarussells (102) durch weniger als drei benachbarte Melkbuchten (104) getrennt ist;
die zweite Position von der ersten Position durch weniger als drei benachbarte Melkbuchten (104) getrennt ist;
die dritte Position von der zweite Position durch weniger als drei benachbarte Melkbuchten (104) getrennt ist;
die vierte Position von einem ersten Ausgang (136a) des Melkkarussells durch weniger als drei benachbarte Melkbuchten (104) getrennt ist;
die fünfte Position von einem zweiten Eingang (142b) des Melkkarussells durch weniger als drei benachbarte Melkbuchten (104) getrennt ist;
die sechste Position von der fünften Position durch weniger als drei benachbarte Melkbuchten (104) getrennt ist;
die siebte Position von der sechsten Position durch weniger als drei benachbarte Melkbuchten (104) getrennt ist; und
die achte Position von einem zweiten Ausgang (135b) des Melkkarussells durch weniger als drei benachbarte Melkbuchten (104) getrennt ist.

10. Das System (1100) nach Anspruch 8, wobei die erste Position, die zweite Position, die dritte Position, die vierte Position, die fünfte Position, die sechste Position, die siebte Position und die achte Position entlang einer Außenkante des Melkkarussells (102) positioniert sind.

11. Das System (1200) nach Anspruch 8, wobei die erste Position, die zweite Position, die dritte Position, die vierte Position, die fünfte Position, die sechste Position, die siebte Position und die achte Position entlang einer Innenkante des Melkkarussells (102) positioniert sind.

12. Das System (900a-c; 1000a-c, 1100a-c, 1200a-c) nach Anspruch 1, wobei
das erste robotische Gerät (116a) dahingehend betriebsfähig ist, dass es die Zitzen des ersten Milchtiers vorbereitet, während sich das Melkkarussell (102) in Bewegung befindet;
das zweite robotische Gerät (116b) dahingehend betriebsfähig ist, dass es das erste Melkgerät an die Zitzen des ersten Milchtiers anschließt, während sich das Melkkarussell (102) in Bewegung befindet;
das dritte robotische Gerät (116d) dahingehend betriebsfähig ist, dass es das zweite Melkgerät an die Zitzen des zweiten Milchtiers anschließt, während sich das Melkkarussell (102) in Bewegung befindet; und
das vierte robotische Gerät (116c) dahingehend betriebsfähig ist, dass es das Desinfektionsmittel auf die Zitzen des ersten Milchtiers aufträgt, während sich das Melkkarussell (102) in Bewegung befindet.

13. Das System (900a-c; 1000a-c, 1100a-c, 1200a-c) nach Anspruch 1, wobei eines oder mehrere aus dem ersten robotischen Gerät (116a), dem zweiten robotischen Gerät (116b) und dem vierten robotischen Gerät (116d) dahingehend betriebsfähig sind, dass sie zwischen den Beinen des ersten Milchtiers vor- und zurückfahren, während sich das Melkkarussell (102) in Bewegung befindet.

14. Ein Verfahren, umfassend:
Aufnehmen eines ersten Milchtiers (106) in eine erste Melkbucht (104b) eines Melkkarussells (102) mit mehreren Melkbuchten, wobei eine zweite Melkbucht (104d) des Melkkarussells (102) ein zweites Milchtier (106) enthält und mindestens eine Melkbucht (104c) die zweite Melkbucht (104d) und die erste Melkbucht (104b) voneinander trennt.
Drehen des Melkkarussells (102), so dass sich die erste Melkbucht (104b) im Wesentlichen neben einem ersten robotischen Gerät (116a) befindet, das in einer ersten Position räumlich nahe zu dem Melkkarussell (102) positioniert ist, wobei das erste robotische Gerät (116a) dahingehend betriebsfähig ist, dass es die Zitzen des ersten Milchtiers (106) vorbereitet, das sich in der ersten Melkbucht (104b) befindet, während sich die erste Melkbucht (104b) im Wesentlichen neben der ersten Position befindet;
Vorbereiten der Zitzen des ersten Milchtiers (106), das sich in der ersten Melkbucht (104b) befindet, mit dem ersten robotischen Gerät (116a);
Drehen des Melkkarussells (102), so dass sich die erste Melkbucht (104b) im Wesentlichen neben einem zweiten robotischen Gerät (116b) befindet, das in einer zweiten Position räumlich nahe dem Melkkarussell (102) positioniert ist, wobei das zweite robotische Gerät (116b) dahingehend betriebsfähig ist, dass es ein erstes Melkgerät an die Zitzen des ersten Milchtiers (106) anschließt, das sich in der ersten Melkbucht (104b) befindet, während sich die Melkbucht im Wesentlichen neben der zweiten Position befindet;
Anschließen des ersten Melkgeräts an die Zitzen des ersten Milchtiers (106), das sich in der ersten Melkbucht (104b) befindet, mit dem zweiten robotischen Gerät (116b), während sich die zweite Melkbucht (104d) im Wesentlichen neben einem dritten robotischen Gerät (116d) befindet, das in einer dritten Position räumlich nahe zu dem Melkkarussell (102) positioniert ist, wobei das dritte robotische Gerät (116d) dahingehend betriebsfähig ist, dass es ein zweites Melkgerät an die Zitzen des zweiten Milchtiers (106) anschließt;
Melken des ersten Milchtiers (106), das sich in der ersten Melkbucht (104b) befindet, mit dem angeschlossenen ersten Melkgerät;
Melken des zweiten Milchtiers (106), das sich in der zweiten Melkbucht (104d) befindet, mit dem angeschlossenen zweiten Melkgerät;
Drehen des Melkkarussells (102), so dass sich die erste Melkbucht (104b) im Wesentlichen neben einem vierten robotischen Gerät (116c) befindet, das in einer vierten Position räumlich nahe zu dem Melkkarussell (102) positioniert ist, wobei das vierte robotische Gerät (116c) dahingehend betriebsfähig ist, dass es ein Desinfektionsmittel auf die Zitzen des ersten Milchtiers (106) aufträgt, das sich in der Melkbucht befindet, nachdem das erste Melkgerät von den Zitzen des ersten Milchtiers (106) entfernt wurde, während sich die erste Melkbucht (104b) im Wesentlichen neben der vierten Position befindet; und
Auftragen eines Desinfektionsmittels auf die Zitzen des ersten Milchtiers, das sich in der ersten Melkbucht (104b) befindet, mit dem vierten robotischen Gerät (116c).

15. Das Verfahren nach Anspruch 14, wobei:
die Vorbereitung der Zitzen des ersten Milchtiers (106) erfolgt, während sich das Melkkarussell (102) in Bewegung befindet;
das Anschließen des ersten Melkgeräts an die Zitzen des ersten Milchtiers (106) erfolgt, während sich das Melkkarussell (102) in Bewegung befindet; und
das Auftragen des Desinfektionsmittels auf die Zitzen des ersten Milchtiers (106) erfolgt, während sich das Melkkarussell (102) in Bewegung befindet.

## Revendications

1. Système (900a à c ; 1000a à c, 1100a à c, 1200a à c), comprenant :
une plate-forme de traite rotative (102) ayant une pluralité de stalles de traite (104) ;
un premier dispositif robotique (116a) positionné à un premier emplacement à proximité de la plate-forme de traite rotative (102), le premier dispositif robotique (116a) pouvant être opéré pour préparer les trayons d'un premier bétail laitier (106) situé dans une première stalle de traite (104b) de la plate-forme de traite rotative (102) tandis que la première stalle de traite (104b) est essentiellement adjacente au premier emplacement ;
un deuxième dispositif robotique (116b) positionné à un deuxième emplacement à proximité de la plate-forme de traite rotative (102), le deuxième dispositif robotique (116b) pouvant être opéré pour connecter un premier dispositif de traite aux trayons du premier bétail laitier (106) situé dans la première stalle de traite (104b) tandis que la première stalle de traite (104b) est essentiellement adjacente au deuxième emplacement ;
un troisième dispositif robotique (116d) positionné à un troisième emplacement à proximité de la plate-forme de traite rotative (102), le troisième dispositif robotique (116d) pouvant être opéré pour connecter un deuxième dispositif de traite aux trayons d'un deuxième bétail laitier (106) situé dans une deuxième stalle de traite (104d) tandis que la deuxième stalle de traite (104d) est essentiellement adjacente au troisième emplacement, dans lequel au moins une stalle de traite (104c) sépare la deuxième stalle de traite (104d) et la première stalle de traite (104a) pour espacer le troisième dispositif robotique (116d) et le deuxième dispositif robotique (116b) ; et
un quatrième dispositif robotique (116c) positionné à un quatrième emplacement à proximité de la plate-forme de traite rotative (102), le quatrième dispositif robotique (116c) pouvant être opéré pour appliquer un désinfectant aux trayons du premier bétail laitier (106) situé dans la première stalle de traite (104b), suite à un retrait du premier dispositif de traite des trayons du premier bétail laitier (106), tandis que la première stalle de traite (104b) est essentiellement adjacente au quatrième emplacement.

2. Système (900a, 1000a, 1100a, 1200a) selon la revendication 1, dans lequel :
la pluralité de stalles de traite (104) sont agencées dans une configuration chevronnée sur la plate-forme de traite rotative (102) ; et le premier dispositif robotique (116a), le deuxième dispositif robotique (116b) et le quatrième dispositif robotique (116d) peuvent être opérés pour s'étendre et se rétracter d'entre une patte avant et une patte arrière du premier bétail laitier (106) situé dans la première stalle de traite (104b).

3. Système (900c, 1000c, 1100c, 1200c) selon la revendication 1, dans lequel :
la pluralité de stalles de traite (104) sont agencées dans une configuration côte à côte sur la plate-forme de traite rotative (102) ; et
le premier dispositif robotique (116a), le deuxième dispositif robotique (116b) et le quatrième dispositif robotique (116d) peuvent être opérés pour s'étendre et se rétracter d'entre les pattes arrière du premier bétail laitier (106) situé dans la première stalle de traite (104b).

4. Système (900b, 1000b, 1100b, 1200b) selon la revendication 1, dans lequel :
la pluralité de stalles de traite (104) sont agencées dans une configuration en tandem sur la plate-forme de traite rotative (102) ; et
le premier dispositif robotique (116a), le deuxième dispositif robotique (116b) et le quatrième dispositif robotique (116d) peuvent être opérés pour s'étendre et se rétracter d'entre une patte avant et une patte arrière du premier bétail laitier (106) situé dans la première stalle de traite (104b).

5. Système (900a à c ; 1000a à c, 1100a à c, 1200a à c) selon la revendication 1, dans lequel :
le premier emplacement est séparé d'une première entrée (142) de la plate-forme de traite rotative (102) par moins de trois stalles de traite adjacentes (104) ;
le deuxième emplacement est séparé du premier emplacement par moins de trois stalles de traite adjacentes (104) ;
le troisième emplacement est séparé du deuxième emplacement par moins de trois stalles de traite adjacentes (104) ; et
le quatrième emplacement est séparé d'une première sortie (136) de la plate-forme de traite rotative (102) par moins de trois stalles de traite adjacentes (104).

6. Système (900, 1100) selon la revendication 1, dans lequel le premier emplacement, le deuxième emplacement, le troisième emplacement et le quatrième emplacement sont situés le long d'un bord externe de la plate-forme de traite rotative (102).

7. Système (1000, 1200) selon la revendication 1, dans lequel le premier emplacement, le deuxième emplacement, le troisième emplacement et le quatrième emplacement sont situés le long d'un bord interne de la plate-forme de traite rotative (102).

8. Système (1100, 1200) selon la revendication 1, comprenant en outre :
un cinquième dispositif robotique (116e) positionné à un cinquième emplacement à proximité de la plate-forme de traite rotative (102), le cinquième dispositif robotique (116e) pouvant être opéré pour préparer les trayons d'un troisième bétail laitier situé dans une troisième stalle de traite (104e) tandis que la troisième stalle de traite est essentiellement adjacente au cinquième emplacement ;
un sixième dispositif robotique (116f) positionné à un sixième emplacement à proximité de la plate-forme de traite rotative (102), le sixième dispositif robotique (116f) pouvant être opéré pour connecter un troisième dispositif de traite aux trayons du troisième bétail laitier (106) situé dans la troisième stalle de traite (104e) tandis que la troisième stalle de traite (104e) est essentiellement adjacente au sixième emplacement ;
un septième dispositif robotique (116g) positionné à un septième emplacement à proximité de la plate-forme de traite rotative (102), le septième dispositif robotique (116g) pouvant être opéré pour connecter un quatrième dispositif de traite aux trayons d'un quatrième bétail laitier (106) situé dans une quatrième stalle de traite (104g) tandis que la quatrième stalle de traite (104g) est essentiellement adjacente au septième emplacement ; et
un huitième dispositif robotique (116h) positionné à un huitième emplacement à proximité de la plate-forme de traite rotative (102), le huitième dispositif robotique (116h) pouvant être opéré pour appliquer un désinfectant aux trayons du troisième bétail laitier (106) situé dans la troisième stalle de traite (104e), suite à un retrait du troisième dispositif de traite des trayons du troisième bétail laitier (106), tandis que la troisième stalle de traite (104e) est essentiellement adjacente au huitième emplacement.

9. Système (1100, 1200) selon la revendication 8, dans lequel :
le premier emplacement est séparé d'une première entrée (142a) de la plate-forme de traite rotative (102) par moins de trois stalles de traite adjacentes (104) ;
le deuxième emplacement est séparé du premier emplacement par moins de trois stalles de traite adjacentes (104) ;
le troisième emplacement est séparé du deuxième emplacement par moins de trois stalles de traite adjacentes (104) ;
le quatrième emplacement est séparé d'une première sortie (136a) de la plate-forme de traite rotative par moins de trois stalles de traite adjacentes (104) ;
le cinquième emplacement est séparé d'une seconde entrée (142b) de la plate-forme de traite rotative par moins de trois stalles de traite adjacentes (104) ;
le sixième emplacement est séparé du cinquième emplacement par moins de trois stalles de traite adjacentes (104) ;
le septième emplacement est séparé du sixième emplacement par moins de trois stalles de traite adjacentes (104) ; et
le huitième emplacement est séparé d'une seconde sortie (135b) de la plate-forme de traite rotative par moins de trois stalles de traite adjacentes (104).

10. Système (1100) selon la revendication 8, dans lequel le premier emplacement, le deuxième emplacement, le troisième emplacement, le quatrième emplacement, le cinquième emplacement, le sixième emplacement, le septième emplacement et le huitième emplacement sont situés le long d'un bord externe de la plate-forme de traite rotative (102).

11. Système (1200) selon la revendication 8, dans lequel le premier emplacement, le deuxième emplacement, le troisième emplacement, le quatrième emplacement, le cinquième emplacement, le sixième emplacement, le septième emplacement et le huitième emplacement sont situés le long d'un bord interne de la plate-forme de traite rotative (102).

12. Système (900a à c ; 1000a à c, 1100a à c, 1200a à c) selon la revendication 1, dans lequel :
le premier dispositif robotique (116a) peut être opéré pour préparer les trayons du premier bétail laitier tandis que la plate-forme de traite rotative (102) se déplace ;
le deuxième dispositif robotique (116b) peut être opéré pour connecter le premier dispositif de traite aux trayons du premier bétail laitier tandis que la plate-forme de traite rotative (102) se déplace ;
le troisième dispositif robotique (116d) peut être opéré pour connecter le deuxième dispositif de traite aux trayons du deuxième bétail laitier tandis que la plate-forme de traite rotative (102) se déplace ; et
le quatrième dispositif robotique (116c) peut être opéré pour appliquer le désinfectant aux trayons du premier bétail laitier tandis que la plate-forme de traite rotative (102) se déplace.

13. Système (900a à c ; 1000a à c, 1100a à c, 1200a à c) selon la revendication 1, dans lequel un ou plusieurs du premier dispositif robotique (116a), du deuxième dispositif robotique (116b) et du quatrième dispositif robotique (116d) peuvent être opérés pour s'étendre et se rétracter d'entre les pattes du premier bétail laitier tandis que la plate-forme de traite rotative (102) se déplace.

14. Procédé, comprenant :
recevoir un premier bétail laitier (102) dans une première stalle de traite (104b) d'une plate-forme de traite rotative (102) ayant une pluralité de stalles de traite,
dans lequel une deuxième stalle de traite (104d) de la plate-forme de traite rotative (102) contient un deuxième bétail laitier (106), et au moins une stalle de traite (104c) sépare la deuxième stalle de traite (104d) et la première stalle de traite (104b) ;
faire tourner la plate-forme de traite rotative (102) de sorte que la première stalle de traite (104b) est essentiellement adjacente à un premier dispositif robotique (116a) positionné à un premier emplacement à proximité de la plate-forme de traite rotative (102), le premier dispositif robotique (102) pouvant être opéré pour préparer les trayons du premier bétail laitier (106) situé dans la première stalle de traite (104b) tandis que la première stalle de traite (104b) est essentiellement adjacente au premier emplacement ;
préparer, en utilisant le premier dispositif robotique (116a), les trayons du premier bétail laitier (106) situé dans la première stalle de traite (104b) ;
faire tourner la plate-forme de traite rotative (102) de sorte que la première stalle de traite (104b) est essentiellement adjacente à un deuxième dispositif robotique (116b) positionné à un deuxième emplacement à proximité de la plate-forme de traite rotative (102), le deuxième dispositif robotique (116b) pouvant être opéré pour connecter un premier dispositif de traite aux trayons du premier bétail laitier (106) situé dans la première stalle de traite (104b) tandis que la stalle de traite est essentiellement adjacente au deuxième emplacement ;
connecter, en utilisant le deuxième dispositif robotique (116b), le premier dispositif de traite aux trayons du premier bétail laitier (106) situé dans la première stalle de traite (104b), dans lequel la deuxième stalle de traite (104d) est essentiellement adjacente à un troisième dispositif robotique (116d) positionné à un troisième emplacement à proximité de la plate-forme de traite rotative (102), le troisième dispositif robotique (116d) pouvant être opéré pour connecter un deuxième dispositif de traite aux trayons du deuxième bétail laitier (106) ;
traire le premier bétail laitier (106) situé dans la première stalle de traite (104b) en utilisant le premier dispositif de traite connecté ;
traire le deuxième bétail laitier (106) situé dans la deuxième stalle de traite (104d) en utilisant le deuxième dispositif de traite connecté ;
faire tourner la plate-forme de traite rotative (102) de sorte que la première stalle de traite (104b) est essentiellement adjacente à un quatrième dispositif robotique (116c) positionné à un quatrième emplacement à proximité de la plate-forme de traite rotative (102), le quatrième dispositif robotique (116c) pouvant être opéré pour appliquer un désinfectant aux trayons du premier bétail laitier (106) situé dans la stalle de traite, suite à un retrait du premier dispositif de traite des trayons du premier bétail laitier (106), tandis que la première stalle de traite (104b) est essentiellement adjacente au quatrième emplacement ; et
appliquer, en utilisant le quatrième dispositif robotique (116c), un désinfectant aux trayons du premier bétail laitier situé dans la première stalle de traite (104b).

15. Procédé selon la revendication 14, dans lequel :
préparer les trayons du premier bétail laitier (106) est réalisé tandis que la plate-forme de traite rotative (102) se déplace ;
connecter le premier dispositif de traite aux trayons du premier bétail laitier (106) est réalisé tandis que la plate-forme de traite rotative (102) se déplace ; et appliquer le désinfectant aux trayons du premier bétail laitier (106) est réalisé tandis que la plate-forme de traite rotative (102) se déplace.
